# EUROPEAN PATENT APPLICATION

(11) **EP 1 585 252 A1**
(43) Date of publication of application: **12.10.2005**
(21) Application number: 04257139.8
(22) Date of filing: 17.11.2004
(51) Int. Cl.: H04L 12/24

(54) **Parameter processing apparatus and parameter setting method for same**

(30) Priority: 09.04.2004 JP 2004115928; 09.04.2004 JP 2004115929; 09.04.2004 JP 2004115930
(71) Applicant: FUJI XEROX CO., LTD., Tokyo (JP)
(72) Inventor: Itoh, Atsuhiro, Fuji Xerox Printing Sys. Co. Ltd, Iwatsuki-shi, Saitama (JP); Inakawa, Yuriko, Fuji Xerox Printing Sys. Co. Ltd, Iwatsuki-shi, Saitama (JP); Wakamatsu, Jun, Fuji Xerox Printing Sys. Co. Ltd, Iwatsuki-shi, Saitama (JP); Tatsuma, Noriyuki, Fuji Xerox Printing Sys. Co.Ltd, Iwatsuki-shi, Saitama (JP); Nishi, Eiji, Fuji Xerox Printing Sys. Co. Ltd, Iwatsuki-shi, Saitama (JP)
(74) Representative: Hitching, Peter Matthew

(57) **Abstract**

A parameter processing apparatus for processing parameters set in a network device (1) connected to a network (3), comprises a parameter reading-out unit (10) that reads out the parameters set in the network device, a transmitting unit (9) that transmits the parameters read out by the parameter reading-out unit to a plurality of network devices connected to the network (3), a receiving unit (9) that receives parameters transmitted by another network device connected to the network, and a parameter setting unit (10 & 7) that sets the parameters received by the receiving unit in the network device.

## Description

### FIELD OF THE INVENTION

The present invention relates to a parameter processing apparatus and a parameter setting method for the parameter processing apparatus, and particularly to a parameter processing apparatus that sets parameters in a plurality of network devices on a network, and a parameter setting method for the parameter processing apparatus.

### BACKGROUND OF THE INVENTION

Conventionally, a network device system in which a plurality of PCs (personal computer) are connected to network devices, such as a printer and a scanner, through a network, such as a LAN (local area network), and the plurality of PCs share these network devices is known.

With such a network device system, when, for example, setting values (hereafter, referred to as parameters) are to be set for the items that the network devices have, it has been necessary for a manager or the like of the network devices to carry out setting the parameters for each device in the network devices.

To eliminate such a problem, a default setting apparatus, printer, and printer constitution providing method have been proposed, in which the parameters set in a network device are copied, and the copied parameters are set in another network device (Japanese patent application publication No. 06-214734, for example).

However, with the art as disclosed in the Japanese patent application publication No. 06-214734, the same procedure for setting must be repeated to set the parameters in a plurality of network devices, that cannot be an efficient method. Further, it is difficult to set only desired parameters in a plurality of network devices, and it is also difficult to copy parameters among different models.

Also, with the art as disclosed in the Japanese patent application publication No. 06-214734, no scheme is provided that allows the detailed execution result of parameter copying in the network devices to be informed. Therefore, it has been necessary for the manager or the like to confirm the detailed execution result of parameter copying for each device in the network devices.

### SUMMARY OF THE INVENTION

The present invention has been made in view of the above circumstances and provide a parameter processing apparatus and parameter setting method that allow the setting of the parameters in a plurality of network devices to be simplified, and also allow the detailed execution result of parameter copying in the network devices to be easily confirmed.

According to an aspect of the present invention, a parameter processing apparatus for processing parameters set in a network device connected to a network, comprises a parameter reading-out unit that reads out the parameters set in the network device, a transmitting unit that transmits the parameters read out by the parameter reading-out unit to a plurality of network devices connected to the network, a receiving unit that receives parameters transmitted by another network device connected to the network, and a parameter setting unit that sets the parameters received by the receiving unit in the network device.

With this configuration, in a network to which a plurality of network devices are connected, when the setting of a particular parameter is to be changed, only changing the setting in one network device will change the setting in the other network devices. Further, the setting of only a particular parameter that is desired to be changed can be changed. Furthermore, even for different models, the common parameters can be set.

According to another aspect of the present invention, a parameter processing apparatus for processing parameters set in a network device connected to a network, comprises a parameter reading-out unit that reads out the parameters set in the network device, a transmitting unit that transmits the parameters read out by the parameter reading-out unit to a plurality of network devices connected to the network, and a first log recording unit that records, as a log, the execution result of setting the parameters that was received from the plurality of network devices to which the parameters were transmitted by the transmitting unit.

With this configuration, a user, such as the manager, can easily confirm the detailed execution result of the parameter copying in the network devices from the execution reflected result web page created by the network devices with which the parameter copying was carried out.

According to still another aspect of the present invention, a parameter processing apparatus for processing parameters set in a network device connected to a network, comprises a parameter receiving unit that receives parameters transmitted by another network device connected to the network, a parameter setting unit that sets the parameters received by the receiving unit in the network device, a log recording unit that records, as a log, the execution reflected result of setting the parameters by the parameter setting unit, and an execution reflected result notifying unit that notifies a destination previously specified by an optional protocol of the execution reflected result of setting the parameters that was recorded by the log recording unit.

With this configuration, a user, such as the manager, can easily confirm the detailed execution result of the parameter copying in the network devices by receiving an electronic mail accompanied by a document of the parameter copying execution reflected result from each particular network device with which the parameter copying was carried out and by referring to the electronic mail received.

### BRIEF DESCRIPTION OF THE DRAWINGS

Embodiments of the present invention will be described in detail based on the following figures, wherein:
FIG. 1 is a diagram illustrating an example of configuration in which a plurality of devices 1 are connected to a client PC 2 through a network 3;
FIG. 2 is a diagram illustrating the functional configuration of the parameter processing apparatus 4;
FIG. 3 is a flow chart illustrating the procedure of processing for parameter transmission that is taken by the parameter processing apparatus 4 when the parameters are to be copied and set in a plurality of devices 1 on the network 3;
FIG. 4 is a flow chart illustrating the procedure of processing for parameter reception that is taken by the parameter processing apparatus when the parameters from the parameter processing apparatus in the transmitter device are to be set in the device;
FIG. 5 illustrates an example of parameter copying execution screen;
FIG. 6 is a flow chart illustrating the procedure of processing for device searching that is taken by the parameter processing apparatus when the other devices on the network are to be searched;
FIG. 7 is a flow chart illustrating the procedure of processing for creating of parameters for transmission that is taken by the parameter processing apparatus when an instruction for carrying out the copying is received, the client PC specifying the devices with which the copying is to be carried out, and the parameters that are to be copied;
FIG. 8 illustrates an example of device searching execution screen;
FIG. 9 illustrates an example of parameter copying execution screen displaying only the pieces of information about the devices meeting the searching condition;
FIG. 10 is a diagram illustrating the functional configuration of the parameter processing apparatus 4;
FIG. 11 is a flow chart illustrating the processing for transmission of a screen of the parameter copying execution results list that is carried out by the parameter processing apparatus when a screen of the parameter copying execution results list is requested by the client PC;
FIG. 12 is a flow chart illustrating the processing for transmission of a screen of the parameter copying execution reflected result that is carried out by the parameter processing apparatus when a screen of the parameter copying execution reflected result is requested by the client PC;
FIG. 13 illustrates an example of screen of the parameter copying execution results list;
FIG. 14 illustrates an example of screen of the parameter copying execution reflected result;
FIG. 15 illustrates an example of configuration with which a plurality of devices 1, a client PC 2, and an electronic mail server 16 are connected to one another through a network 3;
FIG. 16 illustrates the functional configuration of the parameter processing apparatus 4;
FIG. 17 is a flow chart illustrating the processing for transmission of an electronic mail that is carried out by the parameter processing apparatus when the device with which the parameter setting is completed is to transmit a document of the execution reflected result of the parameter copying to the specified electronic mail address;
FIG. 18 is a flow chart illustrating the processing for transmission of an electronic mail that is carried out by the parameter processing apparatus when the device with which the parameter setting is completed is to create a screen of the parameter copying execution reflected result, and transmit the URL for the created screen of the parameter copying execution reflected result to the specified electronic mail address;
FIG. 19 is a flow chart illustrating the processing for transmission of an electronic mail that is carried out by the parameter processing apparatus when the device with which the parameter setting is completed is to transmit a document of the parameter copying execution reflected result to the device that transmitted the parameters;
FIG. 20 is a flow chart illustrating the processing for creating a screen of the parameter copying execution reflected result that is carried out by the parameter processing apparatus when an electronic mail accompanied by a document of the parameter copying execution reflected result is to be received from the device with which the parameter setting is completed, and a screen of the parameter copying execution reflected result is to be created on the basis of the document of the parameter copying execution reflected result;
FIG. 21 illustrates an example of parameter copying execution screen;
FIG. 22 illustrates an example of electronic mail accompanied by a document of the parameter copying reflected result; and
FIG. 23 illustrates an example of electronic mail accompanied by the URL for a screen of the parameter copying reflected result.

### DESCRIPTION OF THE PREFERRED EMBODIMENTS

Embodiments of the present invention will be described with reference to the accompanying drawings.

### EMBODIMENT 1

As embodiment 1 of the present invention, the configuration with which a plurality of network devices (hereinafter, referred to as devices) incorporating a parameter processing apparatus according to the present invention are connected to a client PC (personal computer) through a network will be specifically described as an example.

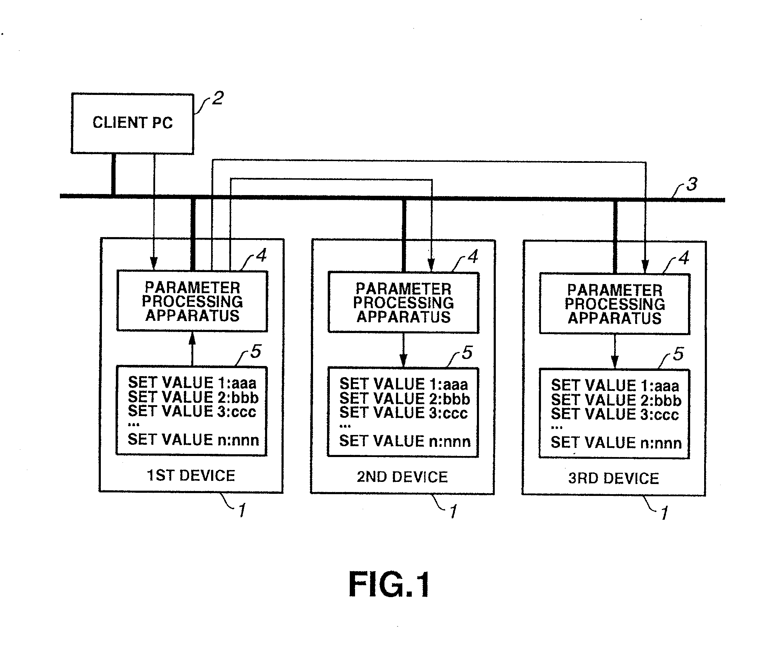

FIG. 1 is a diagram illustrating an example of configuration in which a plurality of devices 1 are connected to a client PC 2 through a network 3.

As shown in FIG. 1, a plurality of devices 1 (a first device, a second device, and a third device) are connected to a client PC 2 that instructs a parameter processing apparatus 4 to make copying of parameters 5, or the like.

The parameter processing apparatus 4 carries out the processing for copying the parameters 5 set in the device 1 and setting them in another device 1. For example, when the parameter processing apparatus 4 is instructed by the client PC 2 to copy the parameters (set value 1: aaa; set value 2: bbb; set value 3: ccc, ...; and set value n: nnn) set in the first device 1 to set them in the second device 1 and the third device 1, the parameter processing apparatus 4 in the first device 1 copies the parameters 5 set in the first device 1 to transmit them to the parameter processing apparatus 4 in the second device 1 and the parameter processing apparatus 4 in the third device 1; the parameter processing apparatus 4 in the second device 1 sets the parameters 5 in the second device 1; and the parameter processing apparatus 4 in the third device 1 sets the parameters 5 in the third device 1.

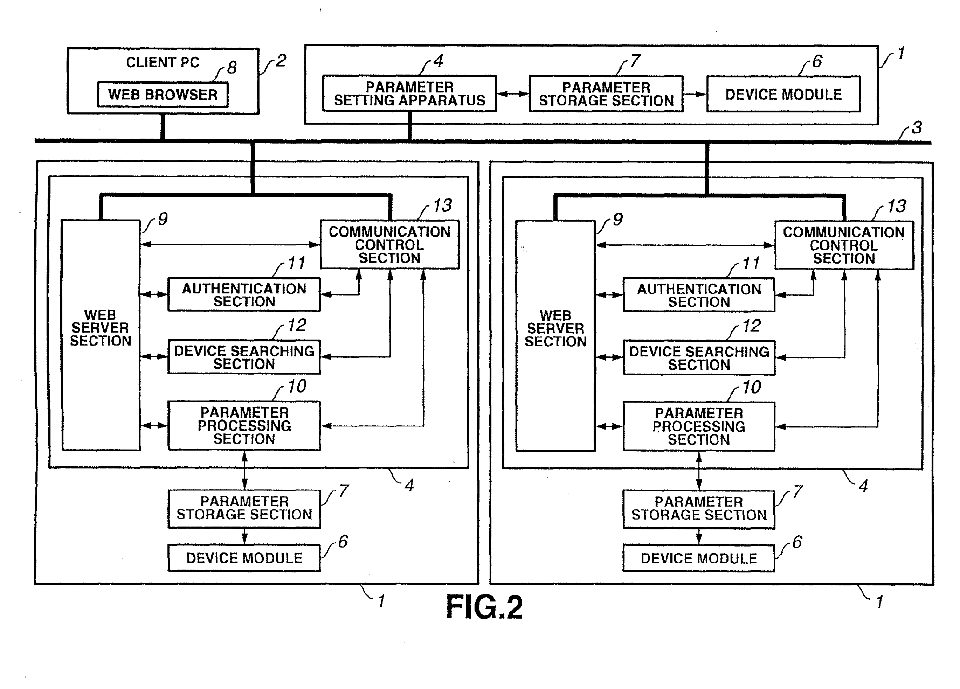

FIG. 2 is a diagram illustrating the functional configuration of the parameter processing apparatus 4.

As shown in FIG. 2, the device 1 (the first device, the second device, or the third device) comprises a device module 6 (for example, a printing processing section for a printer and an image reading-out processing section for a scanner) for carrying out the processing corresponding to the function of the particular device 1; a parameter storage section 7 for storing the parameters for the processing carried out in the device module 6; and a parameter processing apparatus 4.

The functional configuration of the parameter processing apparatus 4 will be described in detail.

The parameter processing apparatus 4 comprises a web server section 9 for carrying out the processing for response to a web browser 8 in the client PC 2; a parameter processing section 10 for carrying out the reading-out processing and the writing-in processing of parameters from/into the parameter storage section 7; an authentication section 11 for carrying out authentication processing; a device searching section 12 for carrying out the processing for searching the devices 1 on the network 3; and a communication control section 13 for processing for controlling the data communication for parameters, authentication information, and the like. The communication protocol to be used in data communication carried out by the communication control section 13 may be of any type, such as HTTP, FTP, or LPD, that is used for printing data communication.

The functional operations that are carried out by the parameter processing apparatus 4 when the parameters are to be copied and set in a plurality of devices 1 on the network 3 will be described in detail with reference to FIG. 2. The case where the parameters set in the first device 1 are to be copied and set in the second device 1 and the third device 1 will be taken as an example for description.

The web browser 8 in the client PC 2 transmits a request for a parameter copying execution screen to the first device 1.

When the web server section 9 of the parameter processing apparatus 4 in the first device 1 receives the request for a parameter copying execution screen from the client PC 2, the web server section 9 transmits a parameter copying execution screen to the client PC 2.

When the web browser 8 in the client PC 2 receives the parameter copying execution screen from the first device 1, the web browser 8 displays the parameter copying execution screen on the display (not shown), and when the address and password for the second device 1 and the address and password for the third device 1 are inputted on the parameter copying execution screen given on the display, the web browser 8 transmits the address and password for the second device 1 and the address and password for the third device 1 to the first device 1.

When the web server section 9 of the parameter processing apparatus 4 in the first device 1 receives the address and password for the second device 1 and the address and password for the third device 1 from the client PC 2, the web server section 9 passes the received address and password for the second device 1 and the received address and password for the third device 1 to the communication control section 13, and notifies the authentication section 11 and the parameter processing section 10 of the web server section 9 having received an instruction for executing parameter copying. Here, when the authentication section 11 receives a notification of the web server section 9 having received an instruction for executing parameter copying, the authentication section 11 creates a username for authentication, and passes the created username for authentication to the communication control section 13, and when the parameter processing section 10 receives the notification of the web server section 9 having received an instruction for executing parameter copying, the parameter processing section 10 reads out the parameters set in the device 1 from the parameter storage section 7, and on the basis of the parameters read out, creates parameters for transmission, passing the created parameters for transmission to the communication control section 13. The parameters for transmission may be either text data or binary data. Further, the parameters for transmission may be encoded.

When the communication control section 13 receives the address and password for the second device 1 and the address and password for the third device 1, the communication control section 13 first transmits a request for connection intended for parameter copying to the second device 1 on the basis of the address of the second device 1.

When the communication control section 13 of the parameter processing apparatus 4 in the second device 1 receives the request for connection intended for parameter copying from the first device, the communication control section 13 transmits a request for authentication to the first device 1.

When the communication control section 13 of the parameter processing apparatus 4 in the first device 1 receives the request for authentication from the second device 1, the communication control section 13 transmits the username for authentication and the password for the second device 1 to the second device 1.

When the communication control section 13 of the parameter processing apparatus 4 in the second device 1 receives the username for authentication and the password for the second device 1 from the first device 1, the communication control section 13 passes the received username for authentication and the received password for the second device 1 to the authentication section 11, and when the authentication section 11 receives the username for authentication and the password for the second device 1, the authentication section 11 carries out authentication of the received username for authentication and the received password for the second device 1. Here, when the username for authentication and the password for the second device 1 do not match, the authentication section 11 notifies the communication control section 13 of the authentication having not been able to be made, and when the communication control section 13 receives a notification of the authentication having not been able to be made, the communication control section 13 transmits refusal to carry out parameter copying to the first device 1. By utilizing the HTTP Basic authentication to employ the MIB sysObjectID for the username for authentication, not only the manufacturer of the device, but also the model can be identified, because the definition of ID varies depending upon the model.

When the username for authentication and the password for the second device 1 match, the authentication section 11 notifies the communication control section 13 of the authentication having been able to be made, and when the communication control section 13 receives a notification of the authentication having been able to be made, the communication control section 13 transmits permission to carry out parameter copying to the first device 1.

When the communication control section 13 of the parameter processing apparatus 4 in the first device 1 receives the permission to carry out parameter copying from the second device 1, the communication control section 13 transmits the parameters for transmission to the second device 1.

When the communication control section 13 of the parameter processing apparatus 4 in the second device 1 receives the parameters for transmission from the first device 1, the communication control section 13 transmits the received parameters for transmission to the parameter processing section 10, and when the parameter processing section 10 receives the parameters for transmission, the parameter processing section 10 sets the parameters in the parameter storage section 7 on the basis of the received parameters for transmission. For any parameter common to a parameter in the first device 1, the setting is made, while, for any parameter not common to a parameter in the first device 1, the setting is not made. For example, assuming that the device is a printer, and parameter copying is made from a three-step tray model to a one-step tray model, the parameters only for the first step are set. Even if a particular parameter is common, it is possible to previously provide that parameter with a setting that will not permit copying thereof

When the parameter setting is completed, the parameter processing section 10 notifies the communication control section 13 of the parameter setting having been completed, and when the communication control section 13 receives a notification of the parameter setting having been completed, the communication control section 13 notifies the first device 1 of the parameter setting having been completed.

When the communication control section 13 of the parameter processing apparatus 4 in the first device 1 receives a notification of the parameter setting having been completed from the second device 1, the communication control section 13 transmits a request for connection intended for parameter copying to the third device 1 on the basis of the address of the third device 1. The subsequent responses between the parameter processing apparatus 4 in the first device 1 and the parameter processing apparatus 4 in the third device 1 are similar to those between the parameter processing apparatus 4 in the first device 1 and the parameter processing apparatus 4 in the second device 1, that are stated above, detailed description is omitted.

Then, when the communication control section 13 of the parameter processing apparatus 4 in the first device 1 receives a notification of the parameter setting having been completed from the third device 1, the operation thereof is ended.

The above description, the scheme is described in which the username for authentication and the password are transmitted, and after the authentication having been able to be made, the parameters are transmitted. However, a scheme in which the parameters are transmitted together with the username for authentication and the password may be adopted.

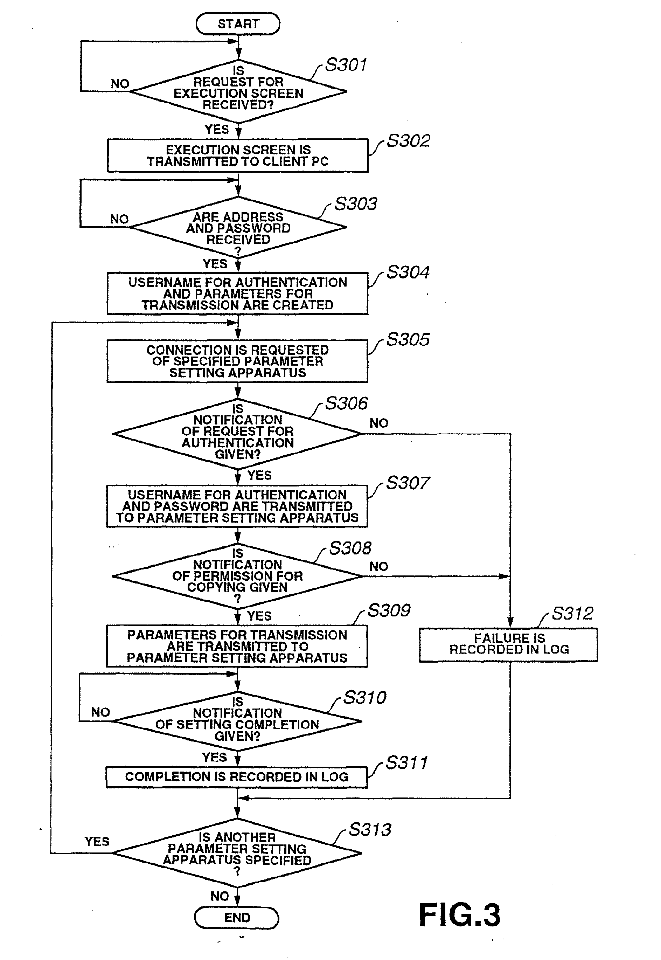

Next, the procedure of processing for parameter transmission that is taken by the parameter processing apparatus 4 when the parameters are to be copied and set in a plurality of devices 1 on the network 3 will be described in detail with reference to the flow chart as shown in FIG. 3.

When a request for a parameter copying execution screen is received from the client PC (YES at step S301), the parameter copying execution screen is transmitted to the client PC (at step S302), and when the address and the password are received from the client PC (YES at step S303), a username for authentication and parameters for transmission are created (at step S304), and connection is requested of the parameter processing apparatus in the device having the specified address (at step S305).

When a notification of request for authentication is given by the parameter processing apparatus in the device (YES at step S306), the username for authentication and the parameters for transmission are transmitted to the parameter processing apparatus in the device (at step S307).

When a notification of permission to carry out parameter copying is given by the parameter processing apparatus in the device (YES at step S308), the parameters for transmission are transmitted to the device (at step S309), and when a notification of the setting having been completed is given by the device (YES at step S310), the completion is recorded in the log (at step S311), the program proceeding to the step S313.

When a notification of request for authentication is not given by the parameter processing apparatus in the device (NO at step S306), or when a notification of refusal to carry out parameter copying is given by the parameter processing apparatus in the device (NO at step S308), the failure is recorded in the log (at step S312), the program proceeding to the step S313.

When another device that address is specified is given (YES at step S313), the program is returned to the step S305.

When no other device that address is specified is given (YES at step S313), the parameter transmission processing is ended.

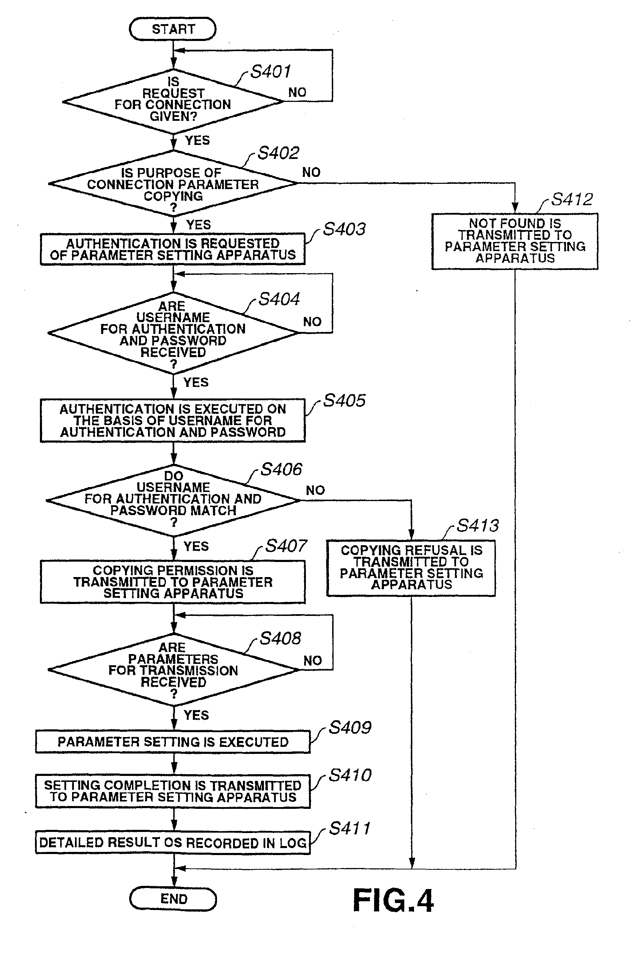

Next, the procedure of processing for parameter reception that is taken by the parameter processing apparatus when the parameters from the parameter processing apparatus in the transmitter device are to be set in the device will be described in detail with reference to the flow chart as shown in FIG. 4.

When a request for connection is given by the parameter processing apparatus in the transmitter device (YES at step S401), the purpose of the connection is recognized (at step S402).

When the purpose of the connection is parameter copying (YES at step S402), authentication is requested of the parameter processing apparatus in the transmitter device (at step S403), and when the username for authentication and the password are received as a response thereto (YES at step S404), the authentication is carried out on the basis of the received username for authentication and the received password (at step S405).

When the username for authentication and the password match (YES at step S406), copying permission is transmitted to the parameter processing apparatus in the transmitter device (at step S407), and when the parameters for transmission are received as a response thereto (YES at step S408), the parameter setting is carried out (at step S409); the setting completion is transmitted to the parameter processing apparatus in the transmitter device (at step S410); and the detailed information is recorded in the log (at step S411), the parameter reception processing being ended.

When the purpose of the connection is not parameter copying (NO at step S402), Not Found is transmitted to the parameter processing apparatus in the transmitter device (at step S412), the parameter reception processing being ended.

When the username for authentication and the password do not match (NO at step S406), the parameter copying refusal is transmitted to the parameter processing apparatus in the transmitter device (at step S413), the parameter reception processing being ended.

Next, the parameter copying execution screen will be described in detail.

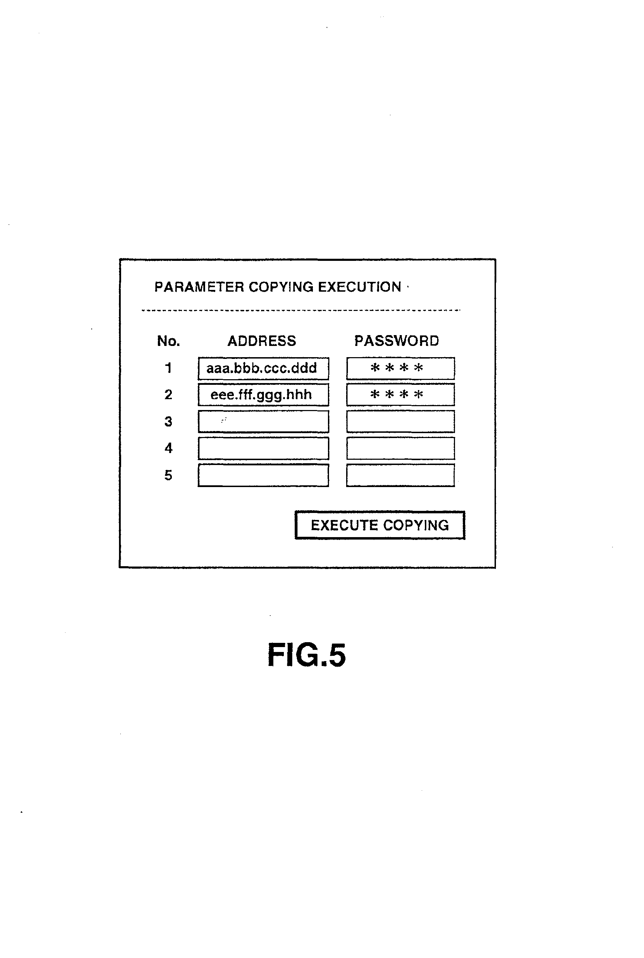

FIG. 5 illustrates an example of parameter copying execution screen.

As shown in FIG. 5, on the parameter copying execution screen, an address inputting column for inputting the addresses of particular devices with which the parameters are to be copied, a password inputting column for inputting the passwords for the particular devices, and an "Execute copying" pushbutton for instructing of parameter copying execution are displayed.

For example, when the parameter copying execution screen as shown in FIG. 5 is received from the web server section of the parameter processing apparatus in the first device and displayed in order to copy the parameters set in the first device as shown in FIG. 1 for setting them in the second device and the third device, the address (aaa.bbb.ccc.ddd) of the second device is inputted into the address inputting column; the password for the second device is inputted into the password inputting column; the address (eee.fff.ggg.hhh) of the third device is inputted into the address inputting column; and the password for the third device is inputted into the password inputting column.

Then, in the status as shown in FIG. 5, depressing the "Execute copying" pushbutton will start setting of the parameters set in the first device in the second device and the third device. The addresses in the inside may be queued to allow the subsequent inputting to be performed before the setting being completed for all devices.

The password can be inputted for each device, however, to simplify inputting of a plurality of addresses, inputting passwords on the parameter copying execution screen may be omitted, and the password for the user's very own machine may be used as an alternative.

Next, the functional operations that are carried out by the parameter processing apparatus when the other devices on the network are to be searched will be described in detail with reference to FIG. 2. The case where the first device searches the other devices on the network will be taken as an example for description.

The web browser in the client PC transmits a request for a device searching execution screen to the first device.

When the web server section of the parameter processing apparatus in the first device receives the request for a device searching execution screen from the client PC, the web server section transmits a device searching execution screen to the client PC.

When the web browser in the client PC receives the device searching execution screen from the first device, the web browser displays the device searching execution screen on the display (not shown), and when the searching condition is inputted on the device searching execution screen given on the display, the web browser transmits the searching condition to the first device.

When the web server section of the parameter processing apparatus in the first device receives the searching condition from the client PC, the web server section passes the received searching condition to the device searching section; when the device searching section receives the searching condition, the device searching section instructs the communication control section to carry out searching the devices on the network; and when the communication control section receives an instruction for carrying out searching the devices, the communication control section carries out searching the devices on the network. The method for searching may be of any type; the broadcast searching may be applied to the specified subnet. Further, the protocol, such as SNMP, FTP, HTTP, or Telnet, may be used to identify whether or not the searched devices are those with which parameter copying is capable of being performed.

The communication control section passes the pieces of information about the searched devices to the device searching section; when the device searching section receives the pieces of information about the devices, the device searching section compares the received pieces of information about the devices with the searching condition, and passes only the pieces of information about the devices meeting the searching condition to the web server section; and when the web server section receives the pieces of information about the devices, the web server section transmits a parameter copying execution screen displaying the received pieces of information about the devices to the client PC.

When the web browser in the client PC receives the parameter copying execution screen displaying the received pieces of information about the devices from the first device, the web browser displays the received parameter copying execution screen on the display.

Then, from among the pieces of information about the devices that are displayed on the parameter copying execution screen given on the display, the devices with which parameter copying is to be carried out, and the types of parameter that is to be copied are selected with the passwords for the selected devices being inputted, and the web browser transmits the addresses and model designations of the selected devices, and the selected types of parameter and the passwords therefor to the first device.

When the web server section of the parameter processing apparatus in the first device receives the addresses and model designations of the selected devices, and the types of parameter and the passwords therefor, the web server section passes the types of parameter to the parameter processing section, and when the parameter processing section receives the types of parameter, the parameter processing section reads out only the received types of parameter, and, on the basis of the parameters read out, creates parameters for transmission for the respective devices with which the copying is to be carried out, passing the created parameters for transmission for the respective devices to the communication control section. Then, the communication control section requests connection of the selected devices, and transmits the parameters for transmission that correspond to the respective devices.

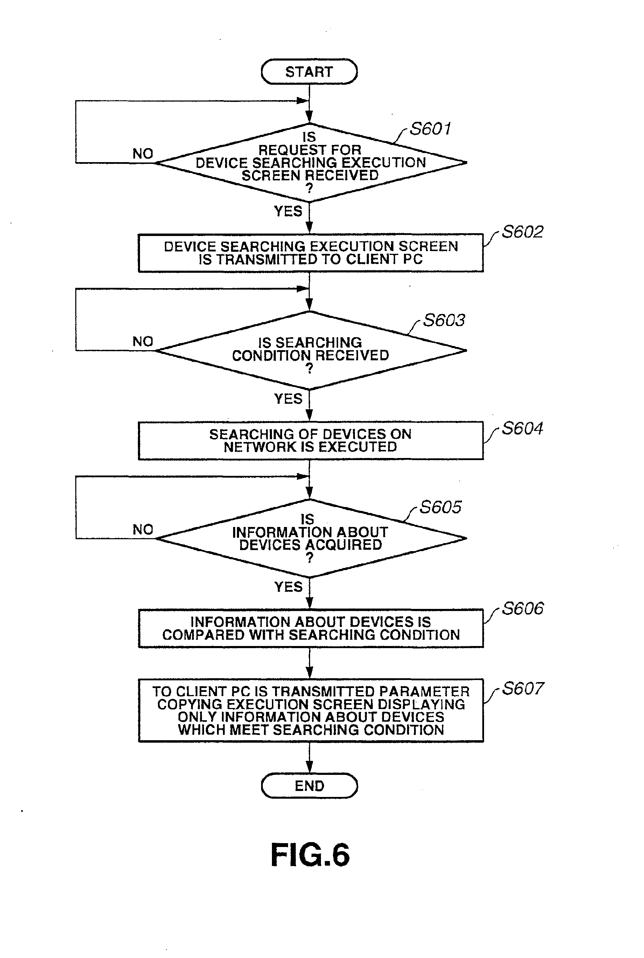

Next, the procedure of processing for device searching that is taken by the parameter processing apparatus when the other devices on the network are to be searched will be described in detail with reference to the flow chart as shown in FIG. 6.

When a request for a device searching execution screen is received from the client PC (YES at step S601), the device searching execution screen is transmitted to the client PC (at step S602); when the searching condition is received from the client PC (YES at step S603), searching the devices on the network is carried out (at step S604); when the pieces of information about the devices are acquired (YES at step S605), the pieces of information about the devices are compared with the searching condition (at step S606), and a parameter copying execution screen displaying only the pieces of information about the devices meeting the searching condition is transmitted to the client PC (at step S607), the device searching processing being ended.

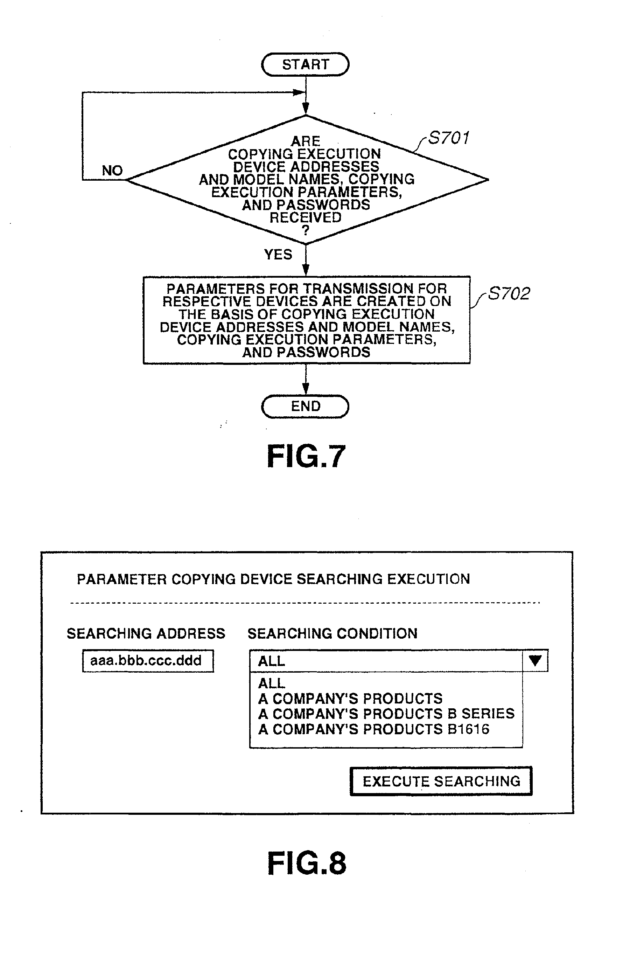

Next, the procedure of processing for creating of parameters for transmission that is taken by the parameter processing apparatus when an instruction for carrying out the copying is received, the client PC specifying the devices with which the copying is to be carried out, and the parameters that are to be copied will be described in detail with reference to the flow chart as shown in FIG. 7

When the addresses and model designations of the devices with which the copying is to be carried out, the parameters that are to be copied, and the passwords for the devices are received from the client PC (YES at step 701), parameters for transmission are created for the respective devices on the basis of the received addresses and model designations of the devices with which the copying is to be carried out, and the received parameters that are to be copied (at step S702), the processing for creating parameters for transmission being ended.

Next, the device searching execution screen will be described in detail.

FIG. 8 illustrates an example of device searching execution screen.

As shown in FIG. 8, on the device searching execution screen, a searching address inputting column for inputting the high-order address of the network to be searched, a searching condition specifying combo box for specifying the searching condition, and an "Execute search" pushbutton for instructing of device searching execution are displayed.

For example, the searching condition "all" specifies that all the devices on the specified network be searched; the searching condition "A company's products" specifies that only the devices manufactured by A company on the specified network be searched; the searching condition "A company's products B series" specifies that only the B model series of devices manufactured by A company on the specified network be searched; and the searching condition "A company's products B1616" specifies that only the B1616 model of devices manufactured by A company on the specified network be searched. Besides the searching conditions as given in FIG. 8, a searching condition, such as that for the models having a common parameter(s) or that for the models having a particular parameter(s), may be specified.

Next, the parameter copying execution screen displaying only the pieces of information about the devices meeting the searching condition will be described in detail.

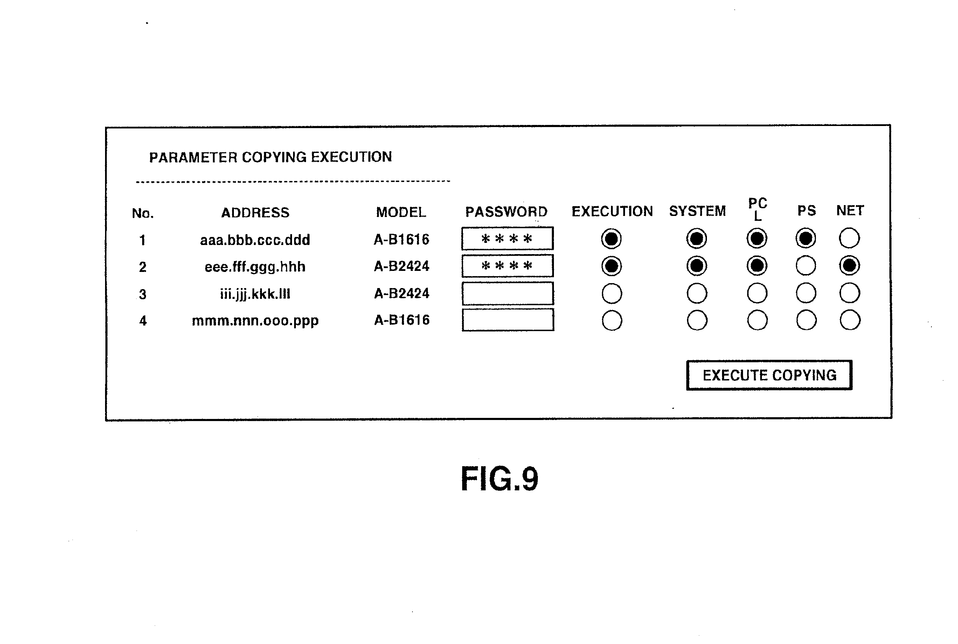

FIG. 9 illustrates an example of parameter copying execution screen displaying only the pieces of information about the devices meeting the searching condition.

As shown in FIG. 9, on the parameter copying execution screen, the addresses and model designations of the devices meeting the searching condition are displayed, and a password inputting column for inputting the passwords for the devices displayed, copying execution selection check boxes for selecting the parameter copying execution, parameter type selection check boxes for selecting the types of parameter that is to be copied are displayed.

For example, the address of the No. 1 device is "aaa.bbb.ccc.ddd", and the model designation thereof is "A-B1616"; the address of the No. 2 device is "eee.fff.ggg.hhh", and the model designation thereof is "A-B2424"; the address of the No. 3 device is "iii.jjj.kkk.lll", and the model designation thereof is "A-B2424"; and the address of the No. 4 device is "mmm.nnn.ooo.ppp", and the model designation thereof is "A-B1616".

When the parameters are to be set in the No. 1 device and the No. 2 device, the password for the respective devices is inputted in the password inputting column corresponding to the respective devices, and a check mark is entered in the copying execution selection check box corresponding to the respective devices.

Further, when the parameters of types of "System", "PCL", and "PS" are to be set in the No. 1 device, a check mark is entered in the check box for "System", the check box for "PCL", and the check box for "PS", respectively, as shown in FIG. 9, and when the parameters of types of "System", "PCL", and "Net" are to be set in the No. 2 device, a check mark is entered in the check box for "System", the check box for "PCL", and the check box for "Net", respectively, as shown in FIG. 9.

Then, in the status as shown in FIG. 9, depressing the "Execute copying" pushbutton will start setting of the parameters in the No. 1 device and the No. 2 device.

By using the MIB or the like, the pieces of information, such as device configuration and parameters that are settable, can be acquired as those about the device, and by displaying these pieces of information on the parameter copying execution screen, the settable parameters for the respective devices can be comprehended beforehand, and on the basis of these, the parameters to be set are selected.

The object to be copied need not be limited to the parameter, but it may be, for example, the application for firmware or the like.

### EMBODIMENT 2

As an embodiment 2 of the present invention, the configuration with which a plurality of network devices (hereinafter, to be referred to as devices) incorporating a parameter processing apparatus according to the present invention are connected to a client PC (personal computer) through a network will be specifically described as an example.

Because the configuration with which a plurality of network devices 1 are connected to a client PC 2 through a network 3 is the same as that as shown in FIG. 1 in the embodiment 1, detailed description is omitted.

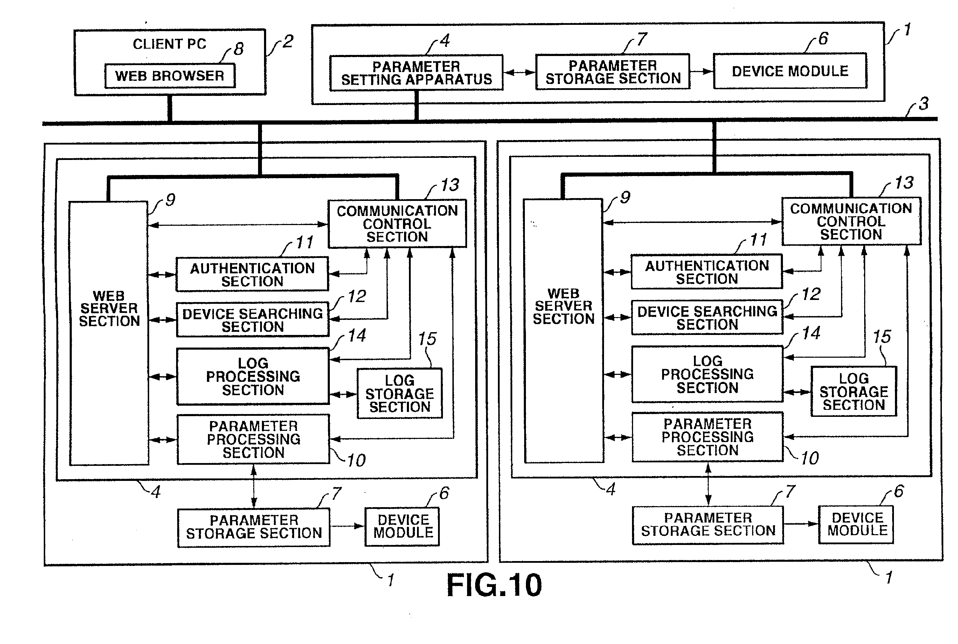

FIG. 10 is a diagram illustrating the functional configuration of the parameter processing apparatus 4.

As shown in FIG. 10, a device 1 (a first device, a second device, or a third device) comprises a device module 6 (for example, a printing processing section for a printer and an image reading-out processing section for a scanner) for carrying out the processing corresponding to the function of the particular device 1; a parameter storage section 7 for storing the parameters for the processing carried out in the device module 6; and a parameter processing apparatus 4.

Here, the functional configuration of the parameter processing apparatus 4 will be described in detail.

The parameter processing apparatus 4 comprises a web server section 9 for carrying out the processing for response to a web browser 8 in the client PC 2; a parameter processing section 10 for carrying out the reading-out processing and the writing-in processing of parameters from/into the parameter storage section 7; an authentication section 11 for carrying out authentication processing; a device searching section 12 for carrying out the processing for searching the devices 1 on the network 3; a communication control section 13 for processing for controlling the data communication for parameters, authentication information, and the like; a log processing section 14 for carrying out the processing for recording in a log related to parameter setting; and a log storage section 15 for storing the log. The communication protocol to be used in data communication carried out by the communication control section 13 may be of any type, such as HTTP, FTP, FTP, or LPD, that is used for printing data communication.

Next, the functional operations that are carried out by the parameter processing apparatus 4 when the parameters are to be copied and set in a plurality of devices 1 on the network 3 will be described in detail with reference to FIG. 10. The case where the parameters set in the first device 1 are to be copied and set in the second device 1 and the third device 1 will be taken as an example for description.

The web browser 8 in the client PC 2 transmits a request for a parameter copying execution screen to the first device 1.

When the web server section 9 of the parameter processing apparatus 4 in the first device 1 receives the request for a parameter copying execution screen from the client PC 2, the web server section 9 transmits a parameter copying execution screen to the client PC 2.

When the web browser 8 in the client PC 2 receives the' parameter copying execution screen from the first device 1, the web browser 8 displays the parameter copying execution screen on the display (not shown), and when the address and password for the second device 1 and the address and password for the third device 1 are inputted on the parameter copying execution screen given on the display, the web browser 8 transmits the address and password for the second device 1 and the address and password for the third device 1 to the first device 1.

When the web server section 9 of the parameter processing apparatus 4 in the first device 1 receives the address and password for the second device 1 and the address and password for the third device 1 from the client PC 2, the web server section 9 passes the received address and password for the second device 1 and the received address and password for the third device 1 to the communication control section 13, and notifies the authentication section I 1 and the parameter processing section 10 of the web server section 9 having received an instruction for executing parameter copying. Here, when the authentication section 11 receives a notification of the web server section 9 having received an instruction for executing parameter copying, the authentication section 11 creates a username for authentication, and passes the created username for authentication to the communication control section 13, and when the parameter processing section 10 receives the notification of the web server section 9 having received an instruction for executing parameter copying, the parameter processing section 10 reads out the parameters set in the device 1 from the parameter storage section 7, and on the basis of the parameters read out, creates parameters for transmission, passing the created parameters for transmission to the communication control section 13. The parameters for transmission may be either text data or binary data. Further, the parameters for transmission may be encoded.

When the communication control section 13 receives the address and password for the second device 1 and the address and password for the third device 1, the communication control section 13 first transmits a request for connection intended for parameter copying to the second device 1 on the basis of the address of the second device 1.

When the communication control section 13 of the parameter processing apparatus 4 in the second device 1 receives the request for connection intended for parameter copying from the first device, the communication control section 13 transmits a request for authentication to the first device 1. When the communication control section 13 of the parameter processing apparatus 4 in the second device 1 receives the request for connection not intended for parameter copying from the first device, the communication control section 13 transmits refusal to carry out connection to the first device 1; when the communication control section 13 of the parameter processing apparatus 4 in the first device 1 receives the refusal to carry out connection from the second device 1, the communication control section 13 notifies the log processing section 14 of the refusal to carry out connection having been received; and when the log processing section 14 receives a notification of the refusal to carry out connection having been received, the log processing section 14 records the failure of parameter copying in the log, and stores the recorded log in the log storage section 15.

When the communication control section 13 of the parameter processing apparatus 4 in the first device 1 receives the request for authentication from the second device 1, the communication control section 13 transmits the username for authentication and the password for the second device 1 to the second device 1.

When the communication control section 13 of the parameter processing apparatus 4 in the second device 1 receives the username for authentication and the password for the second device 1 from the first device 1, the communication control section 13 passes the received username for authentication and the received password for the second device 1 to the authentication section 11, and when the authentication section 11 receives the username for authentication and the password for the second device 1, the authentication section 11 carries out authentication of the received username for authentication and the received password for the second device 1. Here, when the username for authentication and the password for the second device 1 do not match, the authentication section 1I notifies the communication control section 13 of the authentication having not been able to be made, and when the communication control section 13 receives a notification of the authentication having not been able to be made, the communication control section 13 transmits refusal to carry out parameter copying to the first device 1. By utilizing the HTTP Basic authentication to employ the MIB sysObjectID for the username for authentication, not only the manufacturer of the device, but also the model can be identified, because the definition of ID varies depending upon the model.

When the username for authentication and the password for the second device 1 do not match, the authentication section 11 notifies the communication control section 13 of the authentication having not been able to be made; when the communication control section 13 receives a notification of the authentication having not been able to be made, the communication control section 13 transmits refusal to carry out parameter copying to the first device 1; when the communication control section 13 of the parameter processing apparatus 4 in the first device 1 receives the refusal to carry out parameter copying from the second device 1, the communication control section 13 notifies the log processing section 14 of the refusal to carry out parameter copying having been received; and when the log processing section 14 receives a notification of the refusal to carry out parameter copying having been received, the log processing section 14 records the failure of parameter copying in the log, and stores the recorded log in the log storage section 15.

When the username for authentication and the password for the second device 1 match, the authentication section 11 notifies the communication control section 13 of the authentication having been able to be made, and when the communication control section 13 receives a notification of the authentication having been able to be made, the communication control section 13 transmits permission to carry out parameter copying to the first device 1.

When the communication control section 13 of the parameter processing apparatus 4 in the first device 1 receives the permission to carry out parameter copying from the second device 1, the communication control section 13 transmits the parameters for transmission to the second device 1.

When the communication control section 13 of the parameter processing apparatus 4 in the second device 1 receives the parameters for transmission from the first device 1, the communication control section 13 transmits the received parameters for transmission to the parameter processing section 10, and when the parameter processing section 10 receives the parameters for transmission, the parameter processing section 10 sets the parameters in the parameter storage section 7 on the basis of the received parameters for transmission. For any parameter common to a parameter in the first device 1, the setting is made, while, for any parameter not common to a parameter in the first device 1, the setting is not made. For example, assuming that the device is a printer, and parameter copying is made from a three-step tray model to a one-step tray model, the parameters only for the first step are set. Even if a particular parameter is common, it is possible to previously provide that parameter with a setting that will not permit copying thereof.

When the parameter setting is completed, the parameter processing section 10 passes the execution result of the parameter setting to the log processing section 14, and when the log processing section 14 receives the execution result, the log processing section 14 records the execution result in the log, and stores the recorded log in the log storage section 15. On the basis of this log, a later described screen of the parameter copying execution reflected result is created.

In addition, when the parameter setting is completed, the parameter processing section 10 notifies the communication control section 13 of the parameter setting having been completed, and when the communication control section 13 receives a notification of the parameter setting having been completed, the communication control section 13 notifies the first device 1 of the parameter setting having been completed.

When the communication control section 13 of the parameter processing apparatus 4 in the first device 1 receives a notification of the parameter setting having been completed from the second device 1, the communication control section 13 notifies the log processing section 14 of the second device 1 having completed the parameter setting, and when the log processing section 14 receives the notification of the second device 1 having completed the parameter setting, the log processing section 14 records the second device 1 having completed the parameter setting in the log, and stores the recorded log in the log storage section 15. On the basis of this log, a later described screen of the parameter copying execution results list is created.

When the communication control section 13 receives a notification of the parameter setting having been completed from the second device 1, the communication control section 13 transmits a request for connection intended for parameter copying to the third device 1 on the basis of the address of the third device 1. The subsequent responses between the parameter processing apparatus 4 in the first device 1 and the parameter processing apparatus 4 in the third device 1 are similar to those between the parameter processing apparatus 4 in the first device 1 and the parameter processing apparatus 4 in the second device 1, that are stated above, detailed description is omitted.

Then, when the communication control section 13 of the parameter processing apparatus 4 in the first device 1 receives a notification of the parameter setting having been completed from the third device 1, the operation thereof is ended.

In the above description, the scheme is described in which the username for authentication and the password are transmitted, and after the authentication having been able to be made, the parameters are transmitted. However, a scheme in which the parameters are transmitted together with the username for authentication and the password may be adopted.

Next, the functional operations that are carried out by the parameter processing apparatus 4 when the client PC 2 requests the result of parameter copying of a plurality of devices 1 on the network 3 will be described in detail with reference to FIG. 10. The case where the parameters set in the first device 1 are to be copied and set in the second device 1 and the third device 1 will be taken as an example for description.

The web browser 8 in the client PC 2 transmits a request for a screen of the parameter copying execution results list to the first device 1.

When the web server section 9 of the parameter processing apparatus 4 in the first device 1 receives the request for a screen of the parameter copying execution results list, the web server section 9 requests a log of the log processing section 14; when the log processing section 14 receives a request for a log, the log processing section 14 reads out the log from the log storage section 15, and passes the read-out log to the web server section 9; and when the web server section 9 receives the log, the web server section 9 creates a screen of the parameter copying execution results list on the basis of the log received, and transmits the created screen of the parameter copying execution results list to the client PC 2.

When the web browser 8 in the client PC 2 receives the screen of the parameter copying execution results list from the first device 1, the web browser 8 displays the screen of the parameter copying execution results list on the display (not shown).

The web browser 8 in the client PC 2 transmits a request for a screen of the parameter copying execution reflected result to the second device 1 on the basis of the screen of the parameter copying execution results list.

When the web server section 9 of the parameter processing apparatus 4 in the second device 1 receives the request for a screen of the parameter copying execution reflected result, the web server section 9 requests a log of the log processing section 14; when the log processing section 14 receives a request for a log, the log processing section 14 reads out the log from the log storage section 15, and passes the read-out log to the web server section 9; and when the web server section 9 receives the log, the web server section 9 creates a screen of the parameter copying execution reflected result on the basis of the log received, and transmits the created screen of the parameter copying execution reflected result to the client PC 2.

When the web browser 8 in the client PC 2 receives the screen of the parameter copying execution reflected result from the second device 1, the web browser 8 displays the screen of the parameter copying execution reflected result on the display (not shown). The operations that are performed when a screen of the parameter copying execution reflected result is requested of the parameter processing apparatus 4 in the third device 1 are similar to those as stated above, detailed description is omitted.

The procedure of processing for parameter transmission that is taken by the parameter processing apparatus when the parameters are to be copied and set in a plurality of devices on the network is similar to that as illustrated in the flow chart as shown in FIG. 3 in the embodiment 1, thus, detailed description is omitted.

The procedure of processing for parameter reception that is taken by the parameter processing apparatus when the parameters from the parameter processing apparatus in the transmitter device are to be set in the device is similar to that as illustrated in the flow chart as shown in FIG. 4 in the embodiment 1, thus, detailed description is omitted.

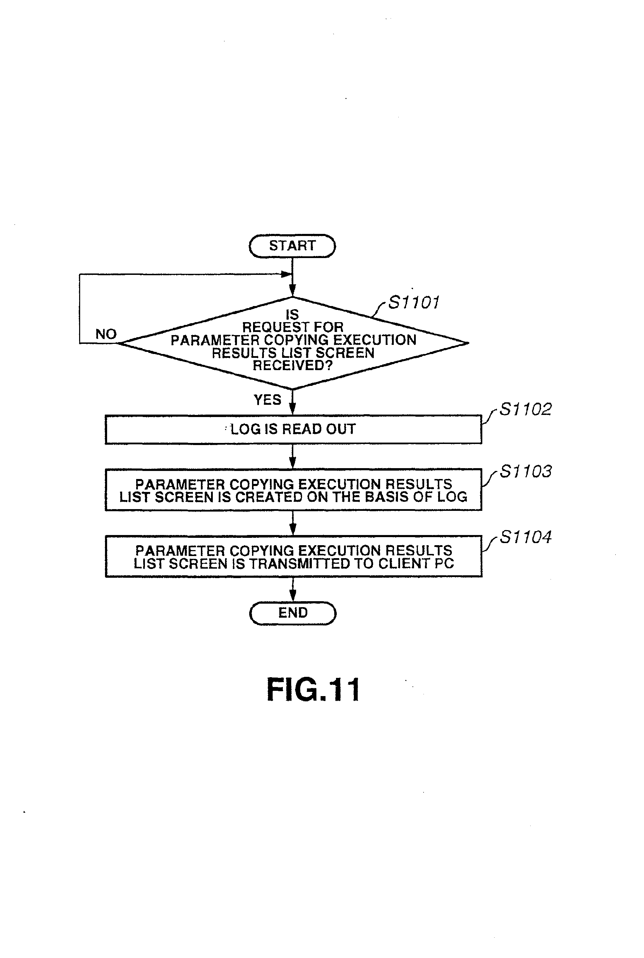

Next, the processing for transmission of a screen of the parameter copying execution results list that is carried out by the parameter processing apparatus when a screen of the parameter copying execution results list is requested by the client PC will be described with reference to the flow chart as shown in FIG. 11.

When a request for a screen of the parameter copying execution results list is received from the client PC (YES at step S 1101), the log is read out (at step S 1102), a screen of the parameter copying execution results list is created on the basis of the log read out (at step S1103), and the created screen of the parameter copying execution results list is transmitted to the client PC (at step S 1104), the processing for transmission of the screen of the parameter copying execution results list being ended.

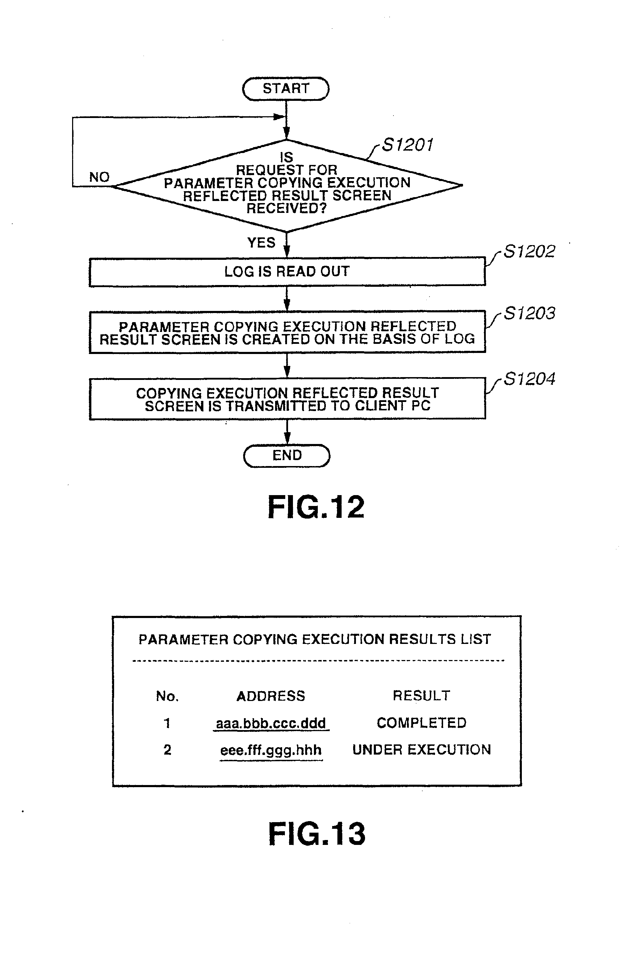

Next, the processing for transmission of a screen of the parameter copying execution reflected result that is carried out by the parameter processing apparatus when a screen of the parameter copying execution reflected result is requested by the client PC will be described with reference to the flow chart as shown in FIG. 12.

When a request for a screen of the parameter copying execution reflected result is received from the client PC (YES at step S1201), the log is read out (at step S1202), a screen of the parameter copying execution reflected result is created on the basis of the log read out (at step S1203), and the created screen of the parameter copying execution reflected result is transmitted to the client PC (at step S1204), the processing for transmission of the screen of the parameter copying execution reflected result being ended.

Because the parameter copying execution screen is similar to that as shown in FIG. 5 in the embodiment 1, detailed description is omitted.

Next, the screen of the parameter copying execution results list will be described in detail.

FIG. 13 illustrates an example of screen of the parameter copying execution results list.

As shown in FIG. 13, on the screen of the parameter copying execution results list, the addresses of the devices with which the parameter copying has been (is being) carried out and the results of execution of the parameter copying with the devices are displayed.

For example, as can be seen from the screen of the parameter copying execution results list as shown in FIG. 13, the parameter copying execution is completed for the No. 1 device, while the parameter copying is under execution for the No. 2 device. Thereafter, by updating the screen of the parameter copying execution results list, the "Under execution" indication for the No. 2 device is updated into the "Completed" one.

Any particular address that is displayed on the screen of the parameter copying execution results list as shown in FIG. 13 is linked, and by clicking the address, the screen of the parameter copying execution reflected result for the device of that address can be displayed.

Next, the screen of the parameter copying execution reflected result will be described in detail.

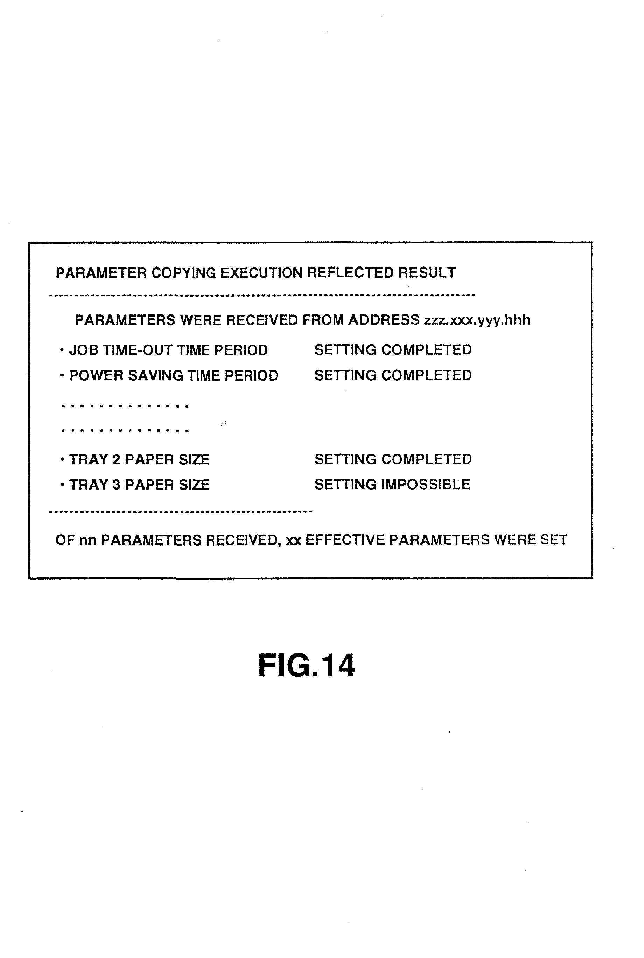

FIG. 14 illustrates an example of screen of the parameter copying execution reflected result.

As shown in FIG. 14, on the screen of the parameter copying execution reflected result, the copying execution reflected result for the parameters for that copying has been executed is displayed.

For example, from the screen of the parameter copying execution reflected result as shown in FIG. 14, it can be seen that setting the parameter for the "Job time-out time period" is completed, setting the parameter for the "Power saving time period" is completed, setting the parameter for the "Tray 2 paper size" is completed, and setting the parameter for the "Tray 3 paper size" has been impossible, for such a reason as the parameter being not supported.

The object to be copied need not be limited to the parameter, but it may be, for example, the application for firmware or the like.

### EMBODIMENT 3

Next, as an embodiment 3 of the present invention, the configuration with which a plurality of network devices (hereinafter, to be referred to as devices) incorporating a parameter processing apparatus according to the present invention are connected to a client PC (personal computer) through a network will be specifically described as an example.

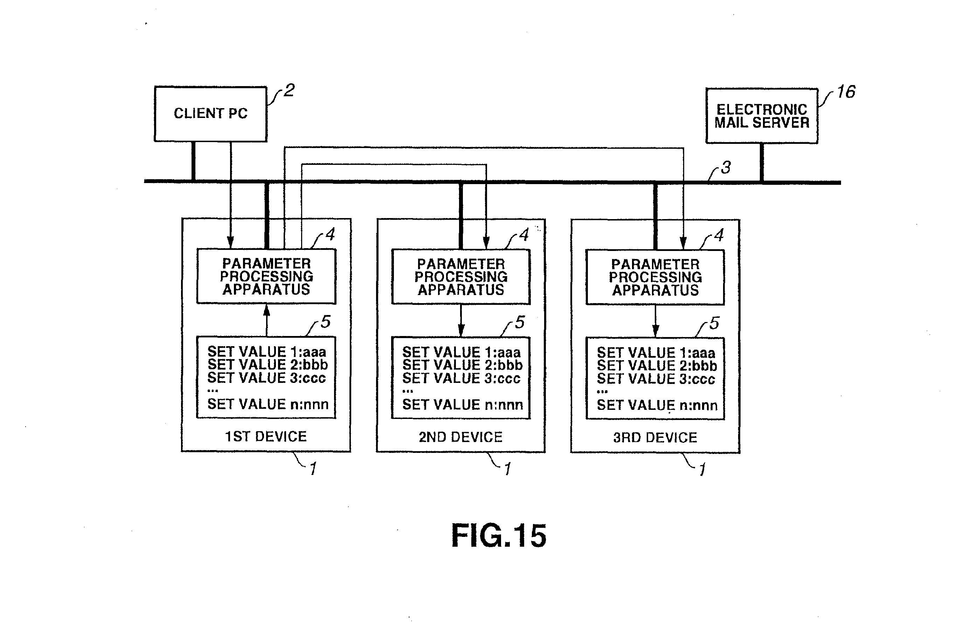

FIG. 15 is a diagram illustrating an example of configuration with which a plurality of devices 1, a client PC 2, and an electronic mail server 16 are connected to one another through a network 3.

As shown in FIG. 15, a plurality of devices 1 (a first device, a second device, and a third device) that incorporate a parameter processing apparatus 4, respectively; a client PC 2 that instructs a parameter processing apparatus 4 to make copying of parameters 5, or the like; and an electronic mail server 16 that transmits and receives an electronic mail are connected to one another through a network 3.

Here, the parameter processing apparatus 4 carries out the processing for copying the parameters 5 set in the device 1 and setting them in another device 1. For example, when the parameter processing apparatus 4 is instructed by the client PC 2 to copy the parameters (set value 1: aaa; set value 2: bbb; set value 3: ccc, ...; and set value n: nnn) set in the first device 1 to set them in the second device 1 and the third device 1, the parameter processing apparatus 4 in the first device 1 copies the parameters 5 set in the first device 1 to transmit them to the parameter processing apparatus 4 in the second device 1 and the parameter processing apparatus 4 in the third device 1; the parameter processing apparatus 4 in the second device 1 sets the parameters 5 in the second device 1; and the parameter processing apparatus 4 in the third device 1 sets the parameters 5 in the third device 1.

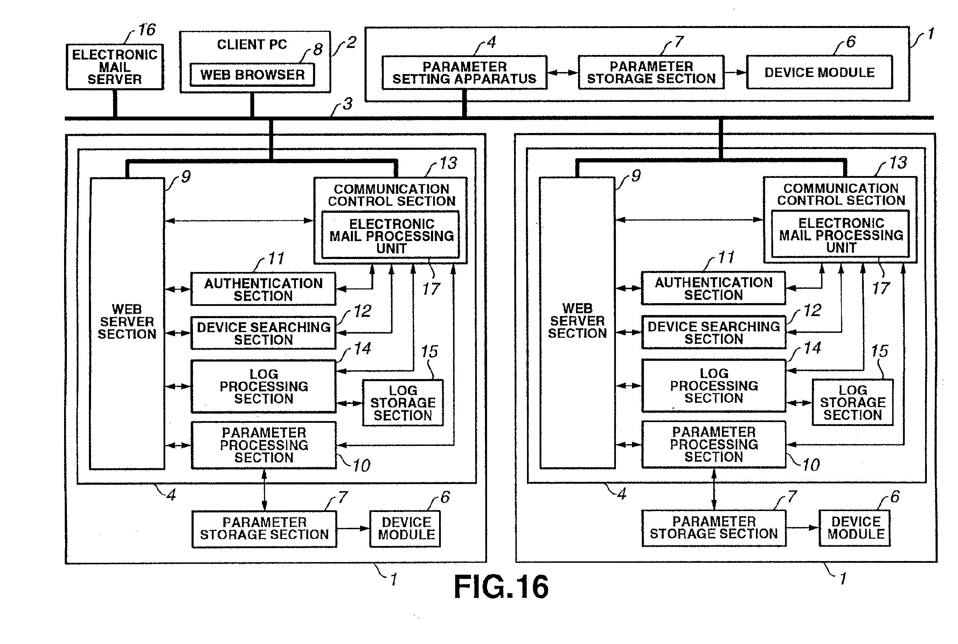

FIG. 16 is a diagram illustrating the functional configuration of the parameter processing apparatus 4.

As shown in FIG. 16, the device 1 (the first device, the second device, or the third device) comprises a device module 6 (for example, a printing processing section for a printer and an image reading-out processing section for a scanner) for carrying out the processing corresponding to the function of the particular device 1; a parameter storage section 7 for storing the parameters for the processing carried out in the device module 6; and a parameter processing apparatus 4.

Here, the functional configuration of the parameter processing apparatus 4 will be described in detail.

The parameter processing apparatus 4 comprises a web server section 9 for carrying out the processing for response to a web browser 8 in the client PC 2; a parameter processing section 10 for carrying out the reading-out processing and the writing-in processing of parameters from/into the parameter storage section 7; an authentication section 11 for carrying out authentication processing; a device searching section 12 for carrying out the processing for searching the devices 1 on the network 3; a communication control section 13 for processing for controlling the data communication for parameters, authentication information, and the like; a log processing section 14 for carrying out the processing for recording in a log related to parameter setting; and a log storage section 15 for storing the log. The communication control section 13 has electronic mail processing unit 17 for carrying out the processing of electronic mails. The communication protocol to be used in data communication carried out by the communication control section 13 may be of any type, such as HTTP, FTP, FTP, SMTP, that is used for transmission and reception of electronic mails, or LPD, that is used for printing data communication.

Next, the functional operations that are carried out by the parameter processing apparatus 4 when the parameters are to be copied and set in a plurality of devices 1 on the network 3 will be described in detail with reference to FIG. 16. The case where the parameters set in the first device 1 are to be copied and set in the second device 1 and the third device 1 will be taken as an example for description.

The web browser 8 in the client PC 2 transmits a request for a parameter copying execution screen to the first device 1.

When the web server section 9 of the parameter processing apparatus 4 in the first device 1 receives the request for a parameter copying execution screen from the client PC 2, the web server section 9 transmits a parameter copying execution screen to the client PC 2.

When the web browser 8 in the client PC 2 receives the parameter copying execution screen from the first device 1, the web browser 8 displays the parameter copying execution screen on the display (not shown), and when the address and password for the second device 1, the address and password for the third device 1, and the electronic mail address of the parameter copying execution reflected result transmission destination are inputted on the parameter copying execution screen given on the display, the web browser 8 transmits the address and password for the second device 1, the address and password for the third device 1, and the electronic mail address of the parameter copying execution reflected result transmission destination to the first device 1.

When the web server section 9 of the parameter processing apparatus 4 in the first device 1 receives the address and password for the second device 1, the address and password for the third device 1, and the electronic mail address of the parameter copying execution reflected result transmission destination from the client PC 2, the web server section 9 passes the received address and password for the second device 1, the received address and password for the third device 1, and the received electronic mail address of the parameter copying execution reflected result transmission destination to the communication control section 13, and notifies the authentication section 11 and the parameter processing section 10 of the web server section 9 having received an instruction for executing parameter copying. Here, when the authentication section 11 receives a notification of the web server section 9 having received an instruction for executing parameter copying, the authentication section 11 creates a username for authentication, and passes the created username for authentication to the communication control section 13, and when the parameter processing section 10 receives the notification of the web server section 9 having received an instruction for executing parameter copying, the parameter processing section 10 reads out the parameters set in the device 1 from the parameter storage section 7, and on the basis of the parameters read out, creates parameters for transmission, passing the created parameters for transmission to the communication control section 13. The parameters for transmission may be either text data or binary data. Further, the parameters for transmission may be encoded.

When the communication control section 13 receives the address and password for the second device 1 and the address and password for the third device 1, the communication control section 13 first transmits a request for connection intended for parameter copying to the second device 1 on the basis of the address of the second device 1.

When the communication control section 13 of the parameter processing apparatus 4 in the second device 1 receives the request for connection intended for parameter copying from the first device, the communication control section 13 transmits a request for authentication to the first device 1. When the communication control section 13 of the parameter processing apparatus 4 in the second device 1 receives the request for connection not intended for parameter copying from the first device, the communication control section 13 transmits refusal to carry out connection to the first device 1; when the communication control section 13 of the parameter processing apparatus 4 in the first device 1 receives the refusal to carry out connection from the second device 1, the communication control section 13 notifies the log processing section 14 of the refusal to carry out connection having been received; and when the log processing section 14 receives a notification of the refusal to carry out connection having been received, the log processing section 14 records the failure of parameter copying in the log, and stores the recorded log in the log storage section 15.

When the communication control section 13 of the parameter processing apparatus 4 in the first device 1 receives the request for authentication from the second device 1, the communication control section 13 transmits the username for authentication and the password for the second device 1 to the second device 1.

When the communication control section 13 of the parameter processing apparatus 4 in the second device 1 receives the username for authentication and the password for the second device 1 from the first device 1, the communication control section 13 passes the received username for authentication and the received password for the second device 1 to the authentication section 11, and when the authentication section 11 receives the username for authentication and the password for the second device 1, the authentication section 11 carries out authentication of the received username for authentication and the received password for the second device 1. Here, when the username for authentication and the password for the second device 1 do not match, the authentication section 11 notifies the communication control section 13 of the authentication having not been able to be made, and when the communication control section 13 receives a notification of the authentication having not been able to be made, the communication control section 13 transmits refusal to carry out parameter copying to the first device 1. By utilizing the HTTP Basic authentication to employ the MIB sysObjectID for the username for authentication, not only the manufacturer of the device, but also the model can be identified, because the definition of ID varies depending upon the model.

When the communication control section 13 of the parameter processing apparatus 4 in the first device 1 receives the refusal to carry out parameter copying from the second device 1, the communication control section 13 notifies the log processing section 14 of the refusal to carry out parameter copying having been received; and when the log processing section 14 receives a notification of the refusal to carry out parameter copying having been received, the log processing section 14 records the failure of parameter copying in the log, and stores the recorded log in the log storage section 15.

When the username for authentication and the password for the second device 1 match, the authentication section 11 notifies the communication control section 13 of the authentication having been able to be made, and when the communication control section 13 receives a notification of the authentication having been able to be made, the communication control section 13 transmits permission to carry out parameter copying to the first device 1.

When the communication control section 13 of the parameter processing apparatus 4 in the first device 1 receives the permission to carry out parameter copying from the second device 1, the communication control section 13 transmits the parameters for transmission and the electronic mail address of the parameter copying execution reflected result transmission destination to the second device 1.

When the communication control section 13 of the parameter processing apparatus 4 in the second device 1 receives the parameters for transmission and the electronic mail address of the parameter copying execution reflected result transmission destination from the first device 1, the communication control section 13 transmits the received parameters for transmission to the parameter processing section 10, and when the parameter processing section 10 receives the parameters for transmission, the parameter processing section 10 sets the parameters in the parameter storage section 7 on the basis of the received parameters for transmission. For any parameter common to a parameter in the first device 1, the setting is made, while, for any parameter not common to a parameter in the first device 1, the setting is not made. For example, assuming that the device is a printer, and parameter copying is made from a three-step tray model to a one-step tray model, the parameters only for the first step are set. Even if a particular parameter is common, it is possible to previously provide that parameter with a setting that will not permit copying thereof. Further, a scheme in which an electronic mail giving a notification of the reception of the parameters having been completed is transmitted to the electronic mail address of the parameter copying execution reflected result transmission destination may also be adopted.

When the parameter setting is completed, the parameter processing section 10 passes the execution result of the parameter setting to the log processing section 14, and when the log processing section 14 receives the execution result, the log processing section 14 records the execution result in the log, and stores the recorded log in the log storage section 15.

In addition, when the parameter setting is completed, the parameter processing section 10 notifies the communication control section 13 of the parameter setting having been completed, and when the communication control section 13 receives a notification of the parameter setting having been completed, the communication control section 13 notifies the first device 1 of the parameter setting having been completed.

When the communication control section 13 of the parameter processing apparatus 4 in the first device 1 receives a notification of the parameter setting having been completed from the second device 1, the communication control section 13 notifies the log processing section 14 of the second device 1 having completed the parameter setting, and when the log processing section 14 receives the notification of the second device 1 having completed the parameter setting, the log processing section 14 records the second device 1 having completed the parameter setting in the log, and stores the recorded log in the log storage section 15.

When the communication control section 13 receives a notification of the parameter setting having been completed from the second device 1, the communication control section 13 transmits a request for connection intended for parameter copying to the third device 1 on the basis of the address of the third device 1. The subsequent responses between the parameter processing apparatus 4 in the first device 1 and the parameter processing apparatus 4 in the third device 1 are similar to those between the parameter processing apparatus 4 in the first device 1 and the parameter processing apparatus 4 in the second device 1, that are stated above, detailed description is omitted.

Then, when the communication control section 13 of the parameter processing apparatus 4 in the first device 1 receives a notification of the parameter setting having been completed from the third device 1, the operation thereof is ended.

Next, the functional operations that are carried out by the parameter processing apparatus 4 when the device 1 with which the parameter setting is completed is to transmit the parameter copying execution reflected result to the specified electronic mail address will be described in detail with reference to FIG. 16. The case where the parameters set in the first device 1 are to be copied and set in the second device 1 and the third device 1, and the destination of transmission of the parameter copying execution reflected result is to be the client PC 2 will be taken as an example for description.

The log processing section 14 of the parameter processing apparatus 4 in the second device 1 creates a document of the parameter copying execution reflected result on the basis of the log in which the execution result of the parameter copying is recorded, and passes the created document of the parameter copying execution reflected result to the communication control section 13; and when the communication control section 13 receives the document of the parameter copying execution reflected result, the electronic mail processing unit 17 creates an electronic mail accompanied by the document of the parameter copying execution reflected result, the communication control section 13 transmits the electronic mail accompanied by the document of the parameter copying execution reflected result to the client PC 2, the electronic mail server 16 transmits the electronic mail from the second device 1 to the client PC 2, and the client PC 2 receives the electronic mail. The parameter processing apparatus 4 in the third device 1 provides a similar function, thus detailed description is omitted. Therefore, the parameter copying execution reflected result can be confirmed on the client PC 2. The above-mentioned function may be applied to the parameter reception result when the parameters are received.

Next, the functional operations that are carried out by the parameter processing apparatus 4 when the device 1 with which the parameter setting is completed is to create a screen of the parameter copying execution reflected result, and transmit the URL (uniform resource locator) for the created screen of the parameter copying execution reflected result to the specified electronic mail address will be described in detail with reference to FIG. 16. The case where the parameters set in the first device 1 are to be copied and set in the second device 1 and the third device 1, and the destination of transmission of the URL for the screen of the parameter copying execution reflected result is to be the client PC 2 will be taken as an example for description.

The log processing section 14 of the parameter processing apparatus 4 in the second device 1 passes the log in which the execution result of the parameter copying is recorded, to the web server 9; when the web server 9 receives the log, the web server 9 creates a screen of the parameter copying execution reflected result on the basis of the log received, and passes the URL for the created screen of the parameter copying execution reflected result to the communication control section 13; and when the communication control section 13 receives the URL for the created screen of the parameter copying execution reflected result, the electronic mail processing unit 17 creates an electronic mail accompanied by the URL for the screen of the parameter copying execution reflected result, the communication control section 13 transmits the electronic mail accompanied by the URL for the screen of the parameter copying execution reflected result to the client PC 2, the electronic mail server 16 transmits the electronic mail from the second device 1 to the client PC 2, and the client PC 2 receives the electronic mail. The parameter processing apparatus 4 in the third device 1 provides a similar function, thus detailed description is omitted. Therefore, by accessing the URL attached to the electronic mail on the client PC 2, the screen of the parameter copying execution reflected result that is created by the device 1 with which the parameters have been copied can be viewed. The above-mentioned function may be applied to the parameter reception result when the parameters are received.

Next, the functional operations that are carried out by the parameter processing apparatus 4 when the device 1 with which the parameter setting is completed is to transmit a document of the parameter copying execution reflected result to the device 1 that transmitted the parameters will be described in detail with reference to FIG. 16. The case where the parameters set in the first device 1 are to be copied and set in the second device 1 and the third device 1 will be taken as an example for description.

The log processing section 14 of the parameter processing apparatus 4 in the second device 1 creates a document of the parameter copying execution reflected result on the basis of the log in which the execution result of the parameter copying is recorded, and passes the created document of the parameter copying execution reflected result to the communication control section 13; and when the communication control section 13 receives the document of the parameter copying execution reflected result, the electronic mail processing unit 17 creates an electronic mail accompanied by the document of the parameter copying execution reflected result, the communication control section 13 transmits the electronic mail accompanied by the document of the parameter copying execution reflected result to the first device, and the electronic mail server 16 transmits the electronic mail from the second device 1 to the first device 1. The parameter processing apparatus 4 in the third device 1 provides a similar function, thus detailed description is omitted.

When the communication control section 13 of the parameter processing apparatus 4 in the first device 1 receives the electronic mail from the second device 1, the electronic mail processing unit 17 takes out the parameter copying execution reflected result document attached to the electronic mail, and the communication control section 13 passes the document of the parameter copying execution reflected result to the web server 9; and when the web server 9 receives the document of the parameter copying execution reflected result, the web server 9 creates a screen of the parameter copying execution reflected result on the basis of the document of the parameter copying execution reflected result. The parameter processing apparatus 4 in the third device 1 provides a similar function, thus detailed description is omitted. Here, a scheme in which a screen listing a plurality of parameter copying execution reflected results that the web server 9 received from a plurality of devices 1 is created may also be adopted. Further, when the first device 1 is a printer, a scheme in which the parameter copying execution reflected result is printed by the printing processing section 6, that is the device module 6 may also be adopted. The above-mentioned function may be applied to the parameter reception result when the parameters are received.

The procedure of processing for parameter transmission that is taken by the parameter processing apparatus when the parameters are to be copied and set in a plurality of devices on the network is similar to that as illustrated in the flow chart as shown in FIG. 3 in the embodiment 1, thus, detailed description is omitted.

The procedure of processing for parameter reception that is taken by the parameter processing apparatus when the parameters from the parameter processing apparatus in the transmitter device are to be set in the device is similar to that as illustrated in the flow chart as shown in FIG. 4 in the embodiment 1, thus, detailed description is omitted.

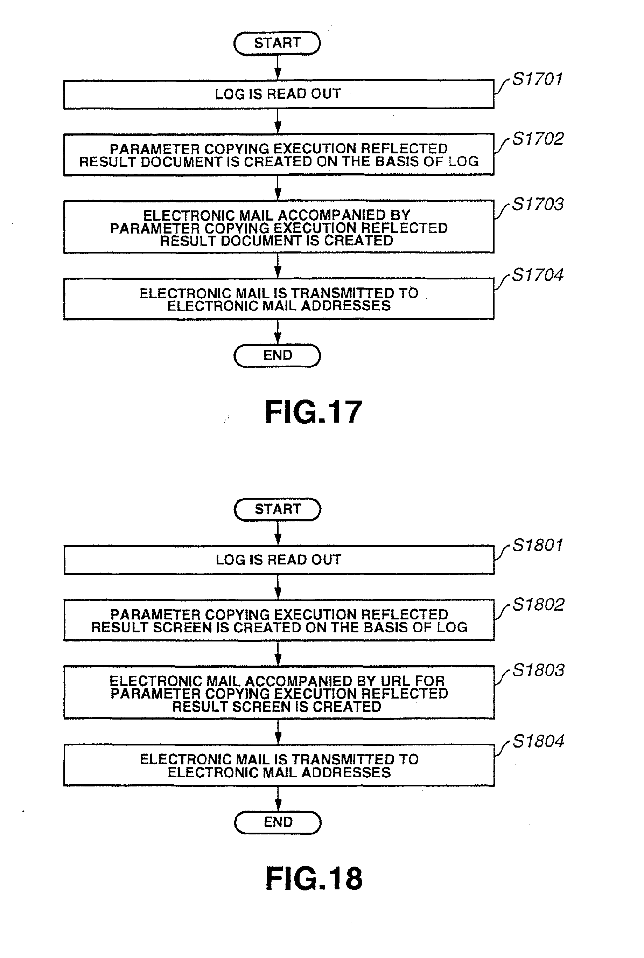

Next, the processing for transmission of an electronic mail that is carried out by the parameter processing apparatus when the device with which the parameter setting is completed is to transmit a document of the execution reflected result of the parameter copying to the specified electronic mail address will be described with reference to the flow chart as shown in FIG. 17.

The log in which the execution result of the parameter copying is recorded is read out (at step S 170 1), a document of the parameter copying execution reflected result is created on the log read out (at step S 1702), an electronic mail accompanied by the created document of the parameter copying execution reflected result is created (at step S 1703), and the electronic mail accompanied by the created document of the parameter copying execution reflected result is transmitted to the electronic mail address of the parameter copying execution reflected result transmission destination (at step S 1704), the electronic mail transmission processing being ended.

Next, the processing for transmission of an electronic mail that is carried out by the parameter processing apparatus when the device with which the parameter setting is completed is to create a screen of the parameter copying execution reflected result, and transmit the URL for the created screen of the parameter copying execution reflected result to the specified electronic mail address will be described with reference to the flow chart as shown in FIG. 18.

The log in which the execution result of the parameter copying is recorded is read out (at step S1801), a screen of the parameter copying execution reflected result is created on the log read out (at step S 1802), an electronic mail accompanied by the URL for the created screen of the parameter copying execution reflected result is created (at step S 1803), and the electronic mail accompanied by the URL for the created screen of the parameter copying execution reflected result is transmitted to the electronic mail address of the parameter copying execution reflected result transmission destination (at step S1804), the electronic mail transmission processing being ended.

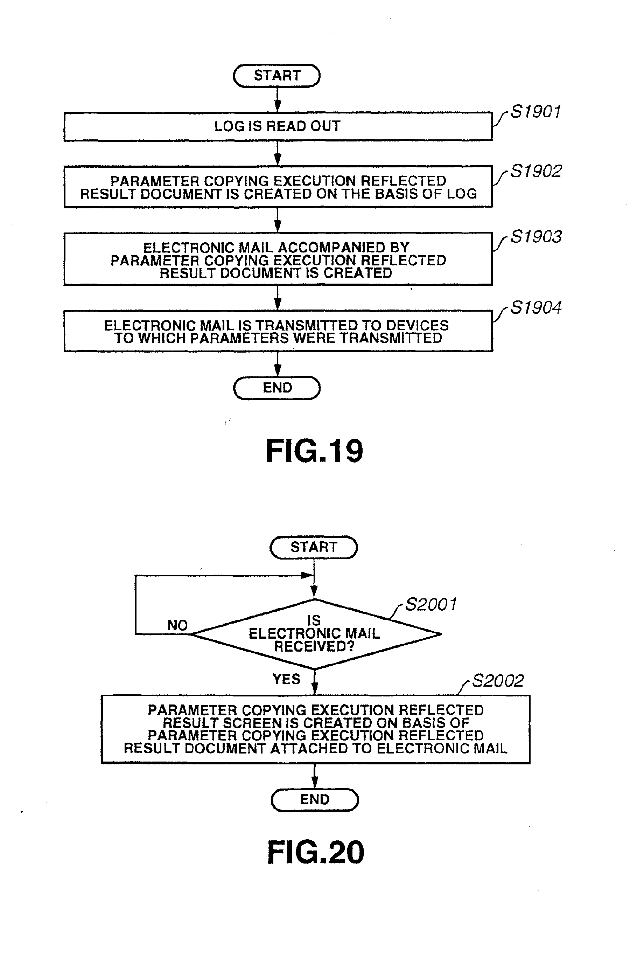

Next, the processing for transmission of an electronic mail that is carried out by the parameter processing apparatus when the device with which the parameter setting is completed is to transmit a document of the parameter copying execution reflected result to the device that transmitted the parameter will be described with reference to the flow chart as shown in FIG. 19.

The log in which the execution result of the parameter copying is recorded is read out (at step S1901), a screen of the parameter copying execution reflected result is created on the log read out (at step S 1902), an electronic mail accompanied by the created document of the parameter copying execution reflected result is created (at step S 1903), and the electronic mail accompanied by the created document of the parameter copying execution reflected result is transmitted to the device that transmitted the parameters (at step S 1904), the electronic mail transmission processing being ended.

Next, the processing for creating a screen of the parameter copying execution reflected result that is carried out by the parameter processing apparatus when an electronic mail accompanied by a document of the parameter copying execution reflected result is to be received from the device with which the parameter setting is completed, and a screen of the parameter copying execution reflected result is to be created on the basis of the document of the parameter copying execution reflected result will be described with reference to the flow chart as shown in FIG. 20.

When an electronic mail accompanied by a document of the parameter copying execution reflected result is received from the device with which the parameter setting is completed (YES at step S2001), and a screen of the parameter copying execution reflected result is created on the basis of the document of the parameter copying execution reflected result that is attached to the electronic mail received (at step S2002), the processing for creating a screen of the parameter copying execution reflected result being ended.

Next, the parameter copying execution screen will be described in detail.

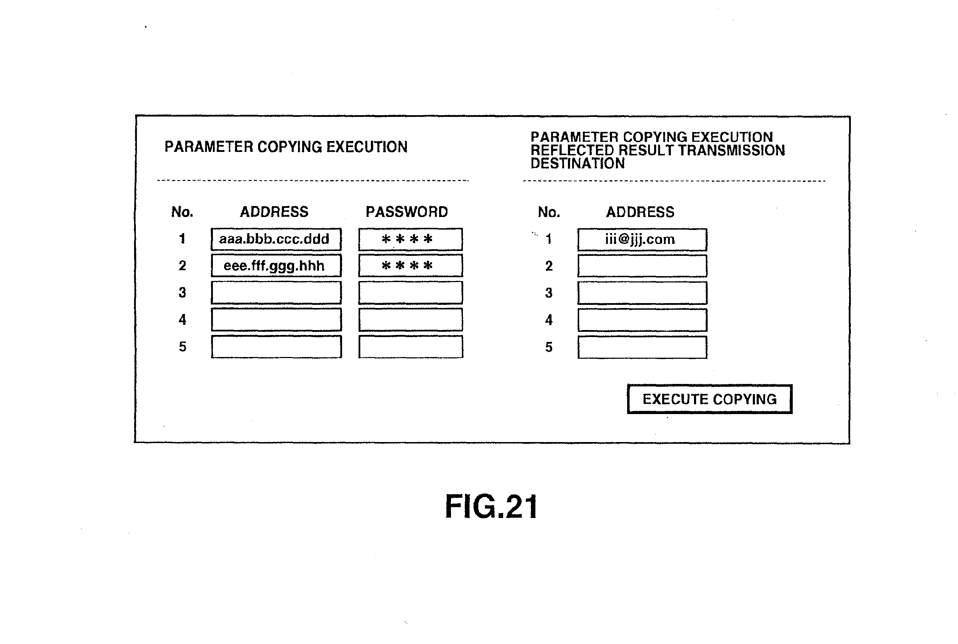

FIG. 21 illustrates an example of parameter copying execution screen.

As shown in FIG. 21, on the parameter copying execution screen, an address inputting column for inputting the addresses of particular devices with which the parameters are to be copied, a password inputting column for inputting the passwords for the particular devices, an electronic mail address inputting column for inputting the electronic mail address of the parameter copying execution reflected result transmission destination, and an "Execute copying" pushbutton for instructing of parameter copying execution are displayed.

For example, when the parameter copying execution screen as shown in FIG. 21 is received from the web server section of the parameter processing apparatus in the first device and displayed in order to copy the parameters set in the first device as shown in FIG. 15 for setting them in the second device and the third device, the address (aaa.bbb.ccc.ddd) of the second device is inputted into the address inputting column; the password for the second device is inputted into the password inputting column; the address (eee.fff.ggg.hhh) of the third device is inputted into the address inputting column; and the password for the third device is inputted into the password inputting column.

Then, in the status as shown in FIG. 21, depressing the "Execute copying" pushbutton will start setting of the parameters set in the first device in the second device and the third device, and when the parameter setting is completed, the second device and the third device transmit a document of the parameter copying reflected result or an electronic mail accompanied by the URL for a screen of the parameter copying reflected result to the electronic mail address (iii@jjj.com) inputted into the electronic mail address inputting column. The addresses in the inside may be queued to allow the subsequent inputting to be performed before the setting being completed for all devices.

The password can be inputted for each device, however, to simplify inputting of a plurality of addresses, inputting passwords on the parameter copying execution screen may be omitted, and the password for the user's very own machine may be used as an alternative.

Next, the electronic mail accompanied by a document of the parameter copying reflected result will be described in detail.

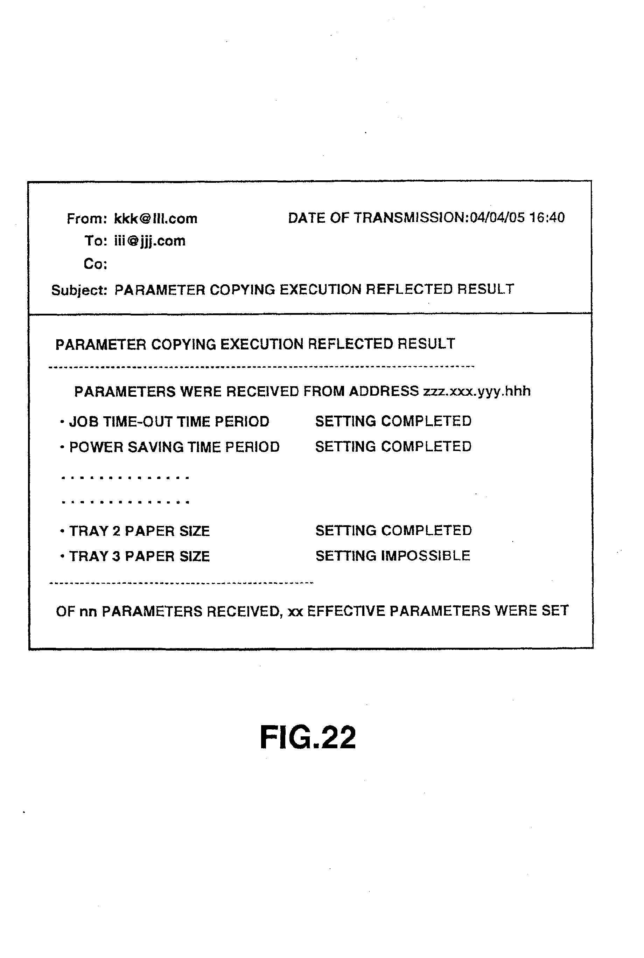

FIG. 22 illustrates an example of electronic mail accompanied by a document of the parameter copying reflected result.

As shown in FIG. 22, on the electronic mail accompanied by a document of the parameter copying reflected result, the execution reflected result for the parameters for that copying has been executed is displayed.

For example, from the electronic mail accompanied by a document of the parameter copying execution reflected result as shown in FIG. 22, it can be seen that setting the parameter for the "Job time-out time period" is completed, setting the parameter for the "Power saving time period" is completed, setting the parameter for the "Tray 2 paper size" is completed, and setting the parameter for the "Tray 3 paper size" has been impossible, for such a reason as the parameter being not supported.

Next, the electronic mail accompanied by the URL for a screen of the parameter copying reflected result will be described in detail.

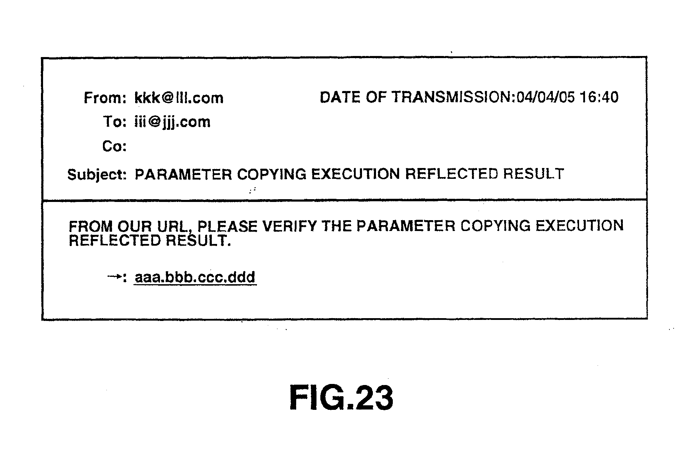

FIG. 23 illustrates an example of electronic mail accompanied by the URL for a screen of the parameter copying reflected result.

As shown in FIG. 23, on the electronic mail, the URL (aaa.bbb.ccc.ddd) for accessing the screen of the parameter copying execution reflected result is displayed, and by clicking or otherwise operating this URL, the screen of the parameter copying execution reflected result as shown in FIG. 14 in the embodiment 2 can be acquired from the device. Because the screen of the parameter copying execution reflected result is similar to that as shown in FIG. 14 in the embodiment 2, detailed description is omitted.

The object to be copied need not be limited to the parameter, but it may be, for example, the application for firmware or the like.

## Claims

1. A parameter processing apparatus for processing parameters set in a network device connected to a network, comprising:
a parameter reading-out unit that reads out the parameters set in the network device,
a transmitting unit that transmits the parameters read out by the parameter reading-out unit to a plurality of network devices connected to the network,
a receiving unit that receives parameters transmitted by another network device connected to the network, and
a parameter setting unit that sets the parameters received by the receiving unit in the network device.

2. The parameter processing apparatus as set forth in claim 1, wherein the transmitting unit transmits, when the parameters are to be transmitted to the plurality of network devices, authentication information to each of the network devices in order to obtain permission to carry out transmission of the parameters, and transmits the parameters to a network device from which permission to carry out transmission of the parameters could have been able to be obtained.

3. The parameter processing apparatus as set forth in claim 2, further comprising an authentication unit that, when the receiving unit receives authentication information transmitted from the another network device, carries out authentication processing of the authentication information that was received, wherein, when the authentication by the authentication unit has succeeded, permission to carry out transmission of the parameters is transmitted to the another network device, and when the authentication by the authentication unit has failed, refusal to carry out transmission of the parameters is transmitted to the another network device.

4. The parameter processing apparatus as set forth in claim 1, wherein, when the parameters are to be transmitted to the plurality of network devices, a parameter to which authentication information is added is transmitted to each of the network devices in order to obtain permission to carry out setting the parameters.

5. The parameter processing apparatus as set forth in claim 4, further comprising an authentication unit that, when the receiving unit receives authentication information and a parameter transmitted from the another network device, carries out authentication processing of the authentication information received, wherein, when the authentication by the authentication unit has succeeded, permission to carry out transmission of the parameters is transmitted to the another network device, and when the authentication by the authentication unit has failed, refusal to carry out transmission of the parameters is transmitted to the another network device.

6. The parameter processing apparatus as set forth in claim 2 and claim 4, further comprising a web server that carries out response processing of web information with a web browser that is provided in an information processing apparatus connected to the network, wherein the web server transmits a transmission instruction web page for instructing transmission of the parameters to the web browser, and from the web browser, receives designation of the network devices to which the parameters are to be transmitted, and the authentication information.

7. The parameter processing apparatus as set forth in claim 6, wherein, on the designation of the network devices, the network devices to which the parameters are to be transmitted are identified, and to each of the network devices that were identified, the authentication information or a parameter to which the authentication information is added is transmitted.

8. The parameter processing apparatus as set forth in claim 1, further comprising a network device searching unit that, from network devices connected to the network, acquires information about the network devices, and from among the information about the network devices, searches the information about the network devices that meet the searching condition specified by the information processing apparatus.

9. The parameter processing apparatus as set forth in claim 8, further comprising a web server that carries out response processing of web information with a web browser that is provided in an information processing apparatus connected to the network, wherein the web server transmits a searching condition specifying web page for specifying the searching condition to the web browser, and receives the searching condition from the web browser, and the network device searching unit searches the information about the network devices that meet the searching condition received by the web server.

10. The parameter processing apparatus as set forth in claim 9, wherein the web server transmits, to the web browser, a transmission instruction web page that displays only the information about the network devices that the network device searching unit searched, and from the web browser, receives designation of the network devices to which the parameters are to be transmitted, and authentication information, the transmitting unit identifies, on the basis of the designation of the network devices that was received by the web server, the network devices to which the parameters are to be transmitted, and to each of the network devices that were identified, the authentication information or a parameter to which the authentication information is added is transmitted.

11. The parameter processing apparatus as set forth in claim 10, wherein the information about the network devices includes information about the parameters that are capable of being set in the network devices, and when the web server received designation of the parameters from the web browser, the parameter reading-out unit reads out only the specified parameters from the parameters set in the network device.

12. The parameter processing apparatus as set forth in claim 11, wherein the information about the network devices includes information about the parameters common to and the parameters not common to the parameters set in the network device.

13. A parameter processing apparatus for processing parameters set in a network device connected to a network, comprising:
a parameter reading-out unit that reads out the parameters set in the network device,
a transmitting unit that transmits the parameters read out by the parameter reading-out unit to a plurality of network devices connected to the network, and
a first log recording unit that records, as a log, the execution result of setting the parameters that was received from the plurality of network devices to which the parameters were transmitted by the transmitting unit.

14. The parameter processing apparatus as set forth in claim 13, further comprising a web server that carries out response processing of web information with a web browser that is provided in an information processing apparatus connected to the network, wherein the web server transmits the execution result of setting the parameters that was received from the plurality of network devices and was recorded by the first log recording unit, to the web browser.

15. The parameter processing apparatus as set forth in claim 14, wherein the web server creates, on the basis of the execution result of setting the parameters that was received from the plurality of network devices and was recorded by the first log recording unit, a parameter setting execution results list web page, and transmits the parameter setting execution results list web page that was created to the web browser.

16. The parameter processing apparatus as set forth in claim 13, wherein the transmitting unit transmits, when the parameters are to be transmitted to the plurality of network devices, authentication information or a parameter to which the authentication information is added to each of the network devices in order to obtain permission to carry out transmission of the parameters, and the first log recording unit records, when permission to carry out transmission of the parameters could not have been able to be obtained, the parameter setting failure as a log.

17. The parameter processing apparatus as set forth in claim 13, further comprising:
a receiving unit that receives parameters transmitted by another network device connected to the network,
a parameter setting unit that sets the parameters received by the receiving unit in the network device, and
a second log recording unit that records, as a log, the execution reflected result of setting the parameters by the parameter setting unit.

18. The parameter processing apparatus as set forth in claim 17, further comprising a web server that carries out response processing of web information with a web browser that is provided in an information processing apparatus connected to the network, wherein the web server transmits the execution reflected result of setting the parameters that was recorded by the second log recording unit to the web browser.

19. The parameter processing apparatus as set forth in claim 18, wherein the web server creates, on the basis of the execution reflected result of setting the parameters that was recorded by the second log recording unit, a parameter setting execution reflected result web page, and transmits the parameter setting execution reflected result web page that was created to the web browser.

20. A parameter processing apparatus for processing parameters set in a network device connected to a network, comprising:
a parameter receiving unit that receives parameters transmitted by another network device connected to the network,
a parameter setting unit that sets the parameters received by the receiving unit in the network device,
a log recording unit that records, as a log, the execution reflected result of setting the parameters by the parameter setting unit, and
an execution reflected result notifying unit that notifies a destination previously specified by an optional protocol of the execution reflected result of setting the parameters that was recorded by the log recording unit.

21. The parameter processing apparatus as set forth in claim 20, further comprising a web server that carries out response processing of web information with a web browser that is provided in an information processing apparatus connected to the network, wherein the web server creates, on the basis of the execution reflected result of setting the parameters that was recorded by the log recording unit, a parameter setting execution reflected result web page, and the execution reflected result notifying unit notifies a destination previously specified by the optional protocol of location information indicating the storage location for the parameter setting execution reflected result web page that was created by the web server.

22. The parameter processing apparatus as set forth in claim 20, further comprising:
a parameter reading-out unit that reads out the parameters set in the network device,
a transmitting unit that transmits the parameters read out by the parameter reading-out unit to a plurality of network devices connected to the network, and
an execution reflected result receiving unit that, from the plurality of network devices, receives the execution reflected result of setting the parameters that was notified by the optional protocol.

23. The parameter processing apparatus as set forth in claim 22, further comprising a web server that carries out response processing of web information with a web browser that is provided in an information processing apparatus connected to the network, wherein the web server creates, on the basis of the execution reflected result of setting the parameters, a parameter setting execution reflected result web page, and transmits the parameter setting execution reflected result web page that was created to the web browser.

24. The parameter processing apparatus as set forth in claim 22, wherein, when the network device is a printing apparatus, the execution reflected result of setting the parameters is printed.

25. The parameter processing apparatus as set forth in claim 22, further comprising a specifying unit that specifies a destination of the execution reflected result of setting the parameters and the notification method.

26. The parameter processing apparatus as set forth in claim 20, wherein the parameters are set values for the function of the network device or applications for firmware or the like.

27. The parameter processing apparatus as set forth in claim 20, further comprising a receiving result notification unit that, when the parameter receiving unit receives parameters, notifies a destination previously specified by an optional protocol of the result of receiving the parameters.

28. The parameter processing apparatus as set forth in claim 27, further comprising a web server that carries out response processing of web information with a web browser that is provided in an information processing apparatus connected to the network, wherein the web server creates, on the basis of the result of receiving the parameters, a parameter receiving result web page, and the receiving result notification unit notifies a destination previously specified by the optional protocol of location information indicating the storage location for the parameter receiving result web page that was created by the web server.

29. The parameter processing apparatus as set forth in claim 27, further comprising:
a parameter reading-out unit that reads out the parameters set in the network device,
a transmitting unit that transmits the parameters read out by the parameter reading-out unit to a plurality of network devices connected to the network, and
a receiving result receiving unit that, from the plurality of network devices, receives the result of receiving the parameters that was notified by the optional protocol.

30. The parameter processing apparatus as set forth in claim 29, further comprising a web server that carries out response processing of web information with a web browser that is provided in an information processing apparatus connected to the network, wherein the web server creates, on the basis of the result of receiving the parameters, a parameter receiving result web page, and transmits the parameter receiving result web page that was created to the web browser.

31. The parameter processing apparatus as set forth in claim 29, wherein, when the network device is a printing apparatus, the result of receiving the parameters is printed.

32. The parameter processing apparatus as set forth in claim 29, further comprising a specifying unit that specifies a destination of the result of receiving the parameters and the notification method.

33. The parameter processing apparatus as set forth in claim 20, wherein the parameters are set values for the function of the network device or applications for firmware or the like.

34. A parameter setting method for parameter processing apparatus for processing parameters set in a network device connected to a network, wherein, when the parameters are to be transmitted to a plurality of network devices connected to the network, parameters set in the network device are read out; the parameters that were read out are transmitted to the plurality of network devices; when parameters transmitted from another network device connected to the network are to be received, the parameters transmitted from the another network device are received; and the parameters that were received are set in the network device.

35. The parameter setting method for parameter processing apparatus as set forth in claim 34, wherein, when the parameters are to be transmitted to the plurality of network devices, authentication information is transmitted to each of the network devices in order to obtain permission to carry out transmission of the parameters, and to a network device from which permission to carry out transmission of the parameters could have been able to be obtained, the parameters are transmitted.

36. The parameter setting method for parameter processing apparatus as set forth in claim 35, wherein, when authentication information transmitted from the another network device is received, authentication processing of the authentication information received is carried out; when the authentication by the authentication processing has succeeded, permission to carry out transmission of the parameters is transmitted to the another network device; and when the authentication by the authentication processing has failed, refusal to carry out transmission of the parameters is transmitted to the another network device.

37. The parameter setting method for parameter processing apparatus as set forth in claim 34, wherein, when the parameters are to be transmitted to the plurality of network devices, a parameter to which authentication information is added is transmitted to each of the network devices in order to obtain permission to carry out setting the parameters.

38. The parameter setting method for parameter processing apparatus as set forth in claim 37, wherein, when authentication information and a parameter transmitted from the another network device is received, authentication processing of the authentication information received is carried out; when the authentication by the authentication unit has succeeded, permission to carry out transmission of the parameters is transmitted to the another network device; and when the authentication by the authentication unit has failed, refusal to carry out transmission of the parameters is transmitted to the another network device.

39. The parameter setting method for parameter processing apparatus as set forth in claim 35 and claim 37, wherein a transmission instruction web page for instructing transmission of the parameters is transmitted to a web browser that is provided in an information processing apparatus connected to the network, and from the web browser, designation of the network devices to which the parameters are to be transmitted, and the authentication information are received.

40. The parameter setting method for parameter processing apparatus as set forth in claim 39, wherein, on the basis of the designation of the network devices, the network devices to which the parameters are to be transmitted are identified, and
to each of the network devices identified, the authentication information or a parameter to which the authentication information is added is transmitted.

41. The parameter setting method for parameter processing apparatus as set forth in claim 34, wherein, from network devices connected to the network, information about the network devices are acquired, and from among the acquired information about the network devices, the information about the network devices that meet the searching condition specified by the information processing apparatus is searched.

42. The parameter setting method for parameter processing apparatus as set forth in claim 41, wherein a searching condition specifying web page for specifying the searching condition is transmitted to a web browser that is provided in an information processing apparatus connected to the network;
the searching condition from the web browser is received;
from network devices connected to the network, information about the network devices are acquired; and from among the acquired information about the network devices, the information about the network devices that meet the searching condition is searched.

43. The parameter setting method for parameter processing apparatus as set forth in claim 42, wherein, to the web browser, a transmission instruction web page that displays only the information about the searched network devices is transmitted; from the web browser, designation of the network devices to which the parameters are to be transmitted, and authentication information are received; on the basis of the received designation of the network devices, the network devices to which the parameters are to be transmitted are identified, and to each of the network devices identified, the authentication information or a parameter to which the authentication information is added is transmitted.

44. The parameter setting method for parameter processing apparatus as set forth in claim 43, wherein the information about the network devices includes information about the parameters that are capable of being set in the network devices, and when designation of the parameters from the web browser was received, only the specified parameters from the parameters set in the network device are read out.

45. The parameter setting method for parameter processing apparatus as set forth in claim 44, wherein the information about the network devices includes information about the parameters common to and the parameters not common to the parameters set in the network device.

46. A parameter setting method for parameter processing apparatus for processing parameters set in a network device connected to a network, wherein parameters set in the network device are read out; the parameters that were read out are transmitted to a plurality of network devices connected to the network; and the execution result of setting the parameters that was received from the plurality of network devices is recorded as a log.

47. The parameter setting method for parameter processing apparatus as set forth in claim 46, wherein the execution result of setting the parameters received from the plurality of network devices that was recorded as the log is transmitted to a web browser that is provided in an information processing apparatus connected to the network.

48. The parameter setting method for parameter processing apparatus as set forth in claim 47, wherein, on the basis of the execution result of setting the parameters received from the plurality of network devices that was recorded as the log, a parameter setting execution results list web page is created, and the parameter setting execution results list web page that was created is transmitted to the web browser.

49. The parameter setting method for parameter processing apparatus as set forth in claim 46, wherein, when the parameters are to be transmitted to the plurality of network devices, authentication information or a parameter to which the authentication information is added is transmitted to each of the network devices in order to obtain permission to carry out transmission of the parameters; and when permission to carry out transmission of the parameters could not have been able to be obtained, the parameter setting failure is recorded as a log.

50. The parameter setting method for parameter processing apparatus as set forth in claim 46, wherein parameters transmitted from another network device connected to the network are received, the parameters that were received are set in the network device, and the execution reflected result of setting the parameters is recorded as a log.

51. The parameter setting method for parameter processing apparatus as set forth in claim 50, wherein the execution reflected result of setting the parameters that was recorded as the log is transmitted to a web browser that is provided in an information processing apparatus connected to the network.

52. The parameter setting method for parameter processing apparatus as set forth in claim 51, wherein, on the basis of the execution reflected result of setting the parameters that was recorded as the log, a parameter setting execution reflected result web page is created, and the parameter setting execution reflected result web page that was created is transmitted to the web browser.

53. A parameter setting method for parameter processing apparatus for processing parameters set in a network device connected to a network, wherein parameters transmitted from another network device connected to the network are received, the parameters that were received are set in the network device, the execution reflected result of setting the parameters is recorded as a log, and the execution reflected result of setting the parameters that was recorded as the log is notified to a destination previously specified by an optional protocol.

54. The parameter setting method for parameter processing apparatus as set forth in claim 53, wherein, on the basis of the execution reflected result of setting the parameters that was recorded as the log, a parameter setting execution reflected result web page is created, and location information indicating the storage location for the parameter setting execution reflected result web page that was created is notified to a destination previously specified by the optional protocol.

55. The parameter setting method for parameter processing apparatus as set forth in claim 53, wherein parameters set in the network device are read out, the parameters that were read out are transmitted to a plurality of network devices connected to the network, and from the plurality of network devices, the execution reflected result of setting the parameters that was notified by the optional protocol is received.

56. The parameter setting method for parameter processing apparatus as set forth in claim 55, wherein, on the basis of the execution reflected result of setting the parameters, a parameter setting execution reflected result web page is created, and the parameter setting execution reflected result web page that was created is transmitted to a web browser that is provided in an information processing apparatus connected to the network.

57. The parameter setting method for parameter processing apparatus as set forth in claim 55, wherein, when the network device is a printing apparatus, the execution reflected result of setting the parameters is printed.

58. The parameter setting method for parameter processing apparatus as set forth in claim 55, wherein a destination of the execution reflected result of setting the parameters and the notification method are specified.

59. The parameter setting method for parameter processing apparatus as set forth in claim 53, wherein the parameters are set values for the function of the network device or applications for firmware or the like.

60. The parameter setting method for parameter processing apparatus as set forth in claim 53, wherein, when the parameters are received, the result of receiving the parameters is notified to a destination previously specified by the optional protocol.

61. The parameter setting method for parameter processing apparatus as set forth in claim 60, wherein, on the basis of the result of receiving the parameters, a parameter setting execution reflected result web page is created, and location information indicating the storage location for the parameter setting execution reflected result web page that was created is notified to a destination previously specified by the optional protocol.

62. The parameter setting method for parameter processing apparatus as set forth in claim 60, wherein parameters set in the network device are read out, the parameters that were read out are transmitted to a plurality of network devices connected to the network, and from the plurality of network devices, the result of receiving the parameters that was notified by the optional protocol is received.

63. The parameter setting method for parameter processing apparatus as set forth in claim 62, wherein, on the basis of the result of receiving the parameters, a parameter receiving result web page is created, and the parameter receiving result web page that was created is transmitted to a web browser that is provided in an information processing apparatus connected to the network.

64. The parameter setting method for parameter processing apparatus as set forth in claim 62, wherein, when the network device is a printing apparatus, the result of receiving the parameters is printed.

65. The parameter setting method for parameter processing apparatus as set forth in claim 62, wherein a destination of the result of receiving the parameters and the notification method are specified.

66. The parameter setting method for parameter processing apparatus as set forth in claim 63, wherein the parameters are set values for the function of the network device or applications for firmware or the like.
